# EUROPEAN PATENT SPECIFICATION

(11) **EP 1 671 983 B1**
(45) Date of publication and mention of the grant of the patent: **25.02.2009**
(21) Application number: 04380249.5
(22) Date of filing: 03.12.2004
(51) Int. Cl.: C08F 10/00, C08F 4/64, C08F 10/02, C07F 17/00

(54) **Catalysts compositions for the polymerization and copolymerization of alpha-olefins**
Katalysatorzusammensetzungen für die Polymerisation und Copolymerisation von alpha-Olefinen
Compositions catalytiques pour le polymérisation et le copolymérisation des alpha-oléfines

(43) Date of publication of application: 21.06.2006
(73) Proprietor: REPSOL QUIMICA S.A., E-28046 Madrid (ES)
(72) Inventor: Sancho Royo, Jose, 28003 Madrid (ES); Alonso Moreno, Carlos, 13600 Alcazar de San Juan, Ciudad Real (ES); Carrillo Hermosilla, Fernando, 13003 Ciudad Real (ES); Otero Montero, Antonio, 13004 Ciudad Real (ES); Antinolo Garcia, Antonio, 13002 Ciudad Real (ES)
(74) Representative: ABG Patentes, S.L.

(56) References cited:
- EP-A- 0 399 348
- EP-A- 0 537 686
- EP-A- 0 700 937
- EP-A- 0 743 324
- WO-A-99/11648
- WO-A-03/106470
- US-A- 5 459 117
- US-B1- 6 448 350
- PURANEN A J ET AL: "Rac and meso diastereomers of an unsymmetric zirconocene dichloride produce polypropenes with similar tacticities and molar masses" ORGANOMETALLICS, vol. 23, no. 16, 2 August 2004 (2004-08-02), pages 3759-3762, XP001200004 ISSN: 0276-7333
- BALBONI D ET AL: "C2-Symmetric zirconocenes for high molecular weight amorphous poly(propylene)" MACROMOLECULAR CHEMISTRY AND PHYSICS, vol. 202, no. 10, 2001, pages 2010-2028, XP001124377 ISSN: 1022-1352
- WARREN T H ET AL: "1,3-Doubly bridged group 4 metallocenes by intramolecular reductive coupling of pendant olefins" ORGANOMETALLICS, vol. 19, no. 2, 24 January 2000 (2000-01-24), pages 127-134, XP001117356 ISSN: 0276-7333
- CHEOL YOON S ET AL: "Synthesis, structure, and catalytic properties of ansa-zirconocenes, Me2Si(RInd)2ZrCl2 (R=2-p- or 3-p-tolyl)" JOURNAL OF ORGANOMETALLIC CHEMISTRY, vol. 559, no. 1-2, 29 May 1998 (1998-05-29), pages 149-156, XP004442248 ISSN: 0022-328X
- BRAVAKIS A M ET AL: "Synthesis of elastomeric poly(propylene) using unsymmetrical zirconocene catalysts: marked reactivity differences of rac- and meso-like diastereomers" MACROMOLECULES, vol. 31, no. 4, 24 February 1998 (1998-02-24), pages 1000-1009, XP000732899 ISSN: 0024-9297
- RESCONI, LUIGI ET AL: "Solution NMR studies of end groups formation in propylene polymerization with ansa-zirconocene catalysts" POLYMER PREPRINTS, vol. 38, no. 1, 1997, pages 776-777, XP009049647 ISSN: 0032-3934

## Description

### FIELD OF THE INVENTION

The present invention relates to a serie of bridged indenyl metallocenes substituted at position 3, to a catalyst system containing them, to a polymerization process using that catalyst system. In particular, it relates to a pure stereoisomer form (racemic or meso) or mixtures thereof, specially useful for producing ethylene (co)polymers of desired molecular weight and molecular weight distribution, by an appropriate selection of the type and number of substituents and the type of isomer.

### BACKGROUND OF THE INVENTION

Since the discovery in the early 1980 decade of alumoxane as cocatalysts in combination with transition metal "cyclopentadiene-type" compounds commonly known as metallocenes to make polyolefin polymers, an ever increasing number of the later compounds are being still described.

Three have been the main primary focus for the development of new metallocene-type catalysts: (i) increasing productivity to lowering catalyst cost, (ii) fitting catalysts systems and compositions to already existing polymerization processes: gas phase, slurry or solution by way of heterogeneization (for the first two cases) and (iii) developing a wider range of polymers and copolymers with improved physical properties (processability, mechanical, optical, etc) by controlling molecular weight, molecular weight distribution, incorporation of comonomer and molecular polymer chain architecture.

While it is known in the art that the use of bridged indenyl metallocene complexes to make ethylene polymers and copolymers leads to final catalyst systems with high activities and good comonomer incorporation efficiencies, all of them yield polyethylenes of high molecular weight (lower than about 1 melt indexes), with somehow narrow molecular weight distribution, in the absence of molecular weight regulators, being hydrogen the most commonly used.

Even though hydrogen can be used industrially to make ethylene (co)polymers of higher than about 0.1 to about 12 melt indexes with such bridged indenyl metallocenes, its use have some additional drawbacks.Among others such as sometimes negative influence on productivity and comonomer incorporation : the use of an additional component along the polymerization feed besides monomers and catalyst, the need to finely control hydrogen to monomer ratios because of the high response of metallocenes regarding dependence of molecular weight of polymer and hydrogen concentration in the feed and, in some cases, particularly under slurry type processes, production of increasing amount of fines.

On the other hand, metallocenes containing non bridged cyclopentadienyl or substituted cyclopentadienyl ligands yield ethylene (co)polymers with higher than zero and about 1 and higher melt indexes without the use of hydrogen, however they show lower activities and lower comonomer incorporation efficiencies than the above mentioned indenyl bridged metallocenes.

It would be highly desirable to have at disposal new bridged indenyl metallocenes, suitable as olefin polymerization catalysts, showing all features together: high activities, high incorporation of comonomer efficiencies and no need of hydrogen as molecular weight regulator to make polymers, such as ethylene (co)polymers, with melt indexes from about 0,2 to about 12 in addition of being able to make also, optionally, polymers of higher molecular weight.

It has been now surprisingly discovered that simple changes in the length of the substituent at the position 3 of the indenyl ligand in bridged 3-substituted-indenyl metallocenes allow unexpectedely to control molecular weight of polymers produced with them in an easy and systematically controlled way making possible to prepare products with a wide range of melt indexes from about 0 to about 12 without the need of using hydrogen as a molecular weight regulator.

Additionally, wise combination of factors such as use of pure stereoisomer (rac or meso), mixtures of isomers (rac and meso), length of the substituent,number of substituents (single or disubstitution) and combination of different lengths substituents (different on each one of the indenyl rings), allows to produce a very wide type of (co)polymers from high to low molecular weight even without the use of hydrogen and with narrow or broad bimodal molecular weight distribution.

It is well recognized in the art that variations in the molecular structure of stereorigid chiral metallocenes including the nature and position of substituents on the "cyclopentadienyl-type" ligands can have significant effects upon the properties of the polymers made with them. In particular, the size and location of substituents on the cyclopentadienyl ring moiety of metallocenes has been found to affect activity, stereoselectivity and molecular weight. The use of specific structures of the metallocenes is critical to achieve determined polymer chain characteristics, polymer product performance and optimal catalyst fit to process conditions and operability.

In the prior art, considerable references of bridged indenyl metallocenes claiming broad general formulae encompassing a vast number of bridged metallocenes are described, however, it will be widely accepted by every skilled in the art that is very unlikely that all of the metallocenes within the mentioned broadly claimed general formulae have actually been prepared and fully evaluated from their polymerization performance and the properties of the polymers obtained by the use of them.

But, what it is most important, not only all the metallocenes included on those broad general formulae most likely have not been synthesized but also its use for producing specific type of polymers and copolymers would not have been predicted without the teachings of the present invention.

It would have been also noted by those skilled in the art that the effects of particular changes in the chemical structure of the metallocenes upon the properties of the polymers made using such metallocenes as catalysts are still mostly an empirical matter and continuous new designs and experiments must be conducted to find the specific effect of such changes. Prior to the findings of the present invention, apparently, no systematic work had been done suggesting the effect of substituents at position 3 on indenyl ligands of bridged 3-substituted-indenyl metallocenes used as catalysts as racemic, meso or rac/meso mixtures upon the main properties of polymers such as polyethylene polymers and copolymers made therefrom.

In EP700937 a large variety of bridged indenyl metallocenes are claimed including different bridge types moieties but, regarding 3-substituted examples, only the rac silanediylbis(1-indenyl-3-methyl) and a mixture of rac/meso 1,2-ethanediylbis(3-trialkylsilylindenyl) zirconocenes are specifically described. Additionally, there is no teaching as how other type of corresponding metallocenes with substituents other than methyl or trialkylsilyl, being disubstituted or monosubstituted, like those included in the present invention being in turn used as substantially pure isomers or in mixtures could be exploited to obtain different type of polyethylene products.

EP743324 describes the use of mixtures of racemic and meso isomers of bridged metallocenes catalysts for making polyethylene with a polydispersity index of at least 3.0. Metallocenes claimed include those pertaining to a broad general formula but in fact only one metallocene is exemplified [dimethylsilylenebis(2-methylindenyl) zirconium dichloride] producing polyethylenes with polydispersity indexes ranging from 3.7 to 4.6.

Bis(1-indenyl)metallocenes substituted at positions 2 and/or 4 are particularly important for the production of highly isotactic polypropylene as described by Spaleck et al. Angew. Chem. Int. Ed. Engl. 1992, 31, 1347.

EP537686 discloses the use of specially bridged substituted-indenyl metallocenes preferably at position 2. Emphasis is made on the importance of separating out undesirable meso stereoisomers from the catalyst composition in the polypropylene preparation when highly isotactic polypropylene is to be produced. In the specific examples, when polyethylene is made, only one 3-substituted indenyl metallocene [dimethylsilylene-bis(3,4,7-trimethylindenyl) zirconium dichloride (Example 14)] is described, as its racemic isomer only, producing polyethylene with very narrow molecular weight distribution.

W003106470 describes the use of very specific multiple substituted indenyl metallocenes containing preferably one indenyl ring disubstituted at least at positions 2 and 3, i.e., with substituents at positions 2 and 3 simultaneously, with the main objective of making ethylene propylene copolymers having high molecular weight.

US6448350 provides a process for the preparation of ethylene copolymers in the presence of catalysts comprising specifically carbon bridged 3-substituted indenyl metallocenes. Besides being characterized specifically by the bridge moiety (single carbon atom) does not teach how the different factors: nature of substituent, single or double substitution, rac or meso isomer can be combined to obtain wide type of targeted copolymer products characterized by their molecular weights and molecular weight distribution.

Same compounds as in US6448350 are described by Balboni et al. in Macromol. Chem. Phys. 2001, 202, 2010, along with the silyl bridge metallocene: dimethylsilanediylbis (1-indenyl-3-i-propyl) zirconium dichloride showing in this case low activity and low molecular weight atactic polypropylene in the polymerization of propylene.

A few more specific bridged 3-substituted-indenyl metallocenes have been also previously described but in all cases their polymerization behaviour has been studied only for the preparation of polypropylene, for example, dimethylsilanediylbis(1-indenyl-3-t-butyl) zirconium dichloride (Ewen, J.A. Macromol. Symp., 1995, 89, 181 and US5459117) to control desired polymer properties of polypropylene. Undesirable nonstereospecific meso stereoisomer is separated and the racemic isomer is used to obtain high isotactic polypropylene.

It is also known a methyl monosusbtituted "non symmetrical" metallocene, namely dimethylsilanediyl(1-indenyl)(1-indenyl-3-methyl) zirconium dichloride (Bravakis, A.M et al. Macromolecules, 1998, 31, 1000) isolated as its meso and racemic stereoisomers. Both isomers have been evaluated for propylene polymerization. Meso isomer yields very low molecular weight (Mw) polypropylene (PP) and low activity while rac isomer yields partially isotactic PP at reasonable productivities.

Warren, T. H. et al, Organometallics, 2000, 19, 127-134, describes a synthetic study of a zirconcycle of formula 13 and hafnacyclopentanes of formula 14 and 15 and discloses compounds having the formula Me₂Si(3-(5-pentenyl)indenyl)₂ZrCl₂ and Me₂Si(3-(5-pentenyl)indenyl)₂HfCl₂ (compounds of formula 7 and 8 respectively) as intermediate in the synthesis of compounds 13, 14 and 15.
WO 99/11648A describes bridged metallocenes of formula (1) wherein one of the metallocene rings is necessarily a cyclopentadienyl ligand.
Sung Cheol Yoon et al, Journal of Organometallic Chemistry, 1998, 559, 149-156, describes the synthesis, structure and catalytic properties of Me₂Si(3-(p-tolyl)indenyl)₂ZrCl₂ and Me₂Si(2-(p-tolyl)indenyl)₂ZrCl_{2.} Concretely, the catalytic properties of said compounds under different reaction conditions in the polymerization of propylene is disclosed. Resconi, L. et al, Polymer Preprints, 1997, 38, 776-777 describes the structure and mechanism of formation of end groups of isotactic polypropylenes produced with chiral C₂-symmetric *ansa*-zirconocene catalysts. The compounds *rac-*[ethylenebis(3-methyl-1-indenyl)]ZrCl₂ and *rac-*(isopropylenebis(3-*t*-butyl-1-indenyl)]ZrCl₂ are disclosed.

In none of the prior art references however there is an evidence of a systematic preparation of different bridged 3-substituted-indenyl metallocenes with a programmed variation of the size of substituent and its number (mono o disubstitution), isolation of both racemic and meso isomers and of any teaching as how to combine all of this factors together to make the wide variety of polethylene products which is one of the inventive aspects of the invention.

### SUMMARY OF THE INVENTION

It has now been surprisingly discovered that some bridged 3-substituted-indenyl metallocene compounds, its racemic or meso steroisomers and mixtures thereof, are useful for producing, in the presence of suitable cocatalysts, polymers, such as polyethylene based polymers, with unexpected versatility in terms of molecular weight and molecular weight distribution depending on combination of three factors: a) the size of the substituent, b) the use of single substantially pure isomers (rac or meso isomers) or mixtures thereof, and c) the type of substitution (number and nature of substituents in each indenyl ligand) due to the particular relationship and interdepence of all the above mentioned factors on the polymers produced.

Generally speaking, bridged indenyl-containing metallocenes, either non substituted or containing methyl groups as substituents on the cyclopentadienyl ring of the indenyl ligand already known in the art, in the absence of hydrogen, produce polyethylenes with high molecular weight (MI about 0 and lower than about 1) when used as polymerization catalysts in combination with suitable cocatalysts. Applicants have now found that this is also the case when the substituent is an ethyl group but, unexpectedly, the corresponding metallocenes with substituents larger than ethyl, such as propyl or larger, yield, under the same conditions, polyethylenes having a melt index (MI) higher than 1, typically between about 1 to about 20 or higher. Non symmetric metallocenes, with different substituents on each indenyl ligand, can also be used to modulate or to adjust the molecular weight to the desired one.

Therefore, one aspect of the present invention relates to new bridged 3-substituted-indenyl metallocene compounds containing two indenyl, wherein at least one of them is substituted at position 3, ligands joined by a bridge and complexed to a metal atom according to formula (I) (defined below) its racemic or meso steroisomers and mixtures thereof. In one particular embodiment, said compounds are the corresponding racemic or meso stereoisomers of formula (II) and (III) (defined below). Said racemic or meso steroisomers, and their mixtures, can be used to produce (co)polymers of olefins, such as, for example, ethylene-based polymers or copolymers with different molecular weights, very different in some cases (e.g., with disubstituted metallocenes when substituents are methyl or ethyl) and rather similar in other cases (e.g., with unsymmetrical long chain substituents, i.e., larger than ethyl), thus allowing to prepare polymers having narrow or broad molecular weight distribution, narrow bimodal molecular weight distribution or broad bimodal molecular weight distribution, by a judicious choice of a combination of isomer content, size of the substituent [small (methyl or ethyl) or larger (e.g., propyl, butyl or larger)] and type of bridged 3-substituted-indenyl metallocene (number and nature of substituents in each indenyl ligand) as will be shown below.

In addition, it has been found that comonomer incorporation into the copolymer also depends on the size and number of the substituent (s) in the metallocene as well as of the type of isomer (rac or meso).

Therefore, with the metallocenes provided by the instant invention, it is possible to have at hand a very versatile and practical tool to control and produce different class of polymers, such as ethylene-based polymers and copolymers.

Another aspect of the present invention relates to a composition comprising a mixture of at least one racemic stereoisomer of formula (IIa) (defined below) and at least one meso stereoisomer of formula (IIIa) (defined below).

Another aspect of the present invention relates to a composition comprising at least a mixture of two or more of any of the metallocenes herein described as a racemic or meso stereoisomers .

Another aspect of the present invention relates to a polymerization catalyst system comprising at least one of the above mentioned metallocene compounds or composition and a co-catalyst. In a particular embodiment, the metallocene compounds are selected from the group consisting of the racemic stereoisomers of the bridged 3-substituted-indenyl metallocene compounds, the meso stereoisomers of the bridged 3-substituted-indenyl metallocene compounds, and mixtures thereof. In another particular embodiment, the polymerization catalyst system further comprises a support. Said optionally supported polymerization catalysts systems can be used in a process for the (co)polymerization of olefins, for example, for the polymerization of C₂-C₂₀ alpha-olefins or for the copolymerization of ethylene and C₃-C₂₀ alpha-olefins.

Thus, another aspect of the present invention relates to the use of a polymerization catalyst system as previously defined in a process for the (co)polymerization of olefins, such as, for the polymerization of C₂-C₂₀ alpha-olefins or for the copolymerization of ethylene and C₃-C₂₀ alpha-olefins. In a particular embodiment, the invention relates to the use of said optionally supported polymerization catalysts systems for producing (co)polymers, such as ethylene-based (co)polymers, of the desired molecular weight and molecular weight distribution, by a judicious selection of the type of substituent and the type of stereoisomer.

Another aspect of the present invention relates to a process for the (co)polymerization of olefins, e.g., for the polymerization of C₂-C₂₀ alpha-olefins or for the copolymerization of ethylene and C₃-C₂₀ alpha-olefins, which comprises the use of said previously mentioned polymerization catalyst system. Specific polymers and copolymers of desirable molecular weight and molecular weight distribution can be produced with the polymerization catalyst system of the present invention in the presence of hydrogen, or, advantageously, in the absence of hydrogen as a molecular weight regulator, what constitutes a practical advantage.

The polymer (homopolymer or copolymer) produced by said process constitutes a further aspect of the present invention. In a particular embodiment, the invention provides a wide variety of ethylene-based polymers and copolymers having narrow or broad molecular weight distribution, narrow bimodal molecular weight distribution or broad bimodal molecular weight distribution, by an appropriate selection of the type of metallocenes, either symmetrical or unsymmetrical, the size of the substituent and the stereoisomer (rac or meso) or mixture of stereoisomers in an appropriate proportion to be used.

### BRIEF DESCRIPTION OF THE DRAWINGS

Figure 1 shows a typical narrow molecular weight distribution (Type I), determined by GPC, of a polymer produced by the process provided by the instant invention by using, preferably, substantially pure isomers of selected bridged 3-indenyl-substituted metallocenes.
Figure 2 shows a typical broad molecular weight distribution (Type II), determined by GPC, of a polymer produced by the process provided by the instant invention by using, preferably, appropriate racemic/meso mixtures of selected bridged 3-indenyl-substituted metallocenes wherein the substituent comprises a chain which is larger than ethyl.
Figure 3 shows a typical broad bimodal molecular weight distribution (Type III), determined by GPC, of a polymer produced by the process provided by the instant invention by using, preferably, appropriate racemic/meso mixtures of selected bridged 3-indenyl-substituted metallocenes wherein the substituent comprises a short chain such as methyl or ethyl.
Figure 4 shows a typical narrow bimodal molecular weight distribution (Type IV), determined by GPC, of a polymer produced by the process provided by the instant invention by using, preferably, appropriate racemic/meso mixtures of selected bridged 3-indenyl-(mono)substituted metallocenes.
Figure 5 shows the ORTEP plot of meso dimethylsilanediylbis(1-indenyl-3-methyl) zirconium dichloride.
Figure 6 shows the ORTEP plot of meso dimethylsilanediylbis(1-indenyl-3-ethyl) zirconium dichloride.

### DETAILED DESCRIPTION OF THE INVENTION

An aspect of the present invention relates to a bridged metallocene compound containing two indenyl ligands, wherein at least one of them is substituted at position 3, joined by a bridging group and complexed to a metal atom according to formula I: 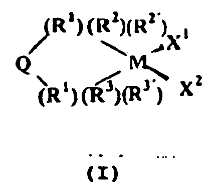 wherein:
M is Ti, Zr or Hf;
R¹ is an indenyl ligand, wherein the benzene ring of R¹ is optionally substituted with one to four substituents which are the same or different selected from a C₁-C₂₀ alkyl and a C₆-C₂₀ aryl;
Q is a divalent group of formula =SiR⁴R⁵ or -CH R⁴-CH R⁵-; wherein R⁴ and R⁵ are, independently, hydrogen atoms or monovalent radicals selected from, halogen, C₁-C₂₀ alkyl , C₆-C₂₀ aryl; C₂-C₂₀ alkenyl; C₇-C₂₀ arylalkyl and C₇-C₂₀ alkylaryl, optionally containing oxygen and/or silicon atoms as substituents;
R² and R³ bonded to R¹ at position 3 are, independently, hydrogen or a radical Rₐ, wherein Rₐ is a monovalent organic radical selected from C₁ -C₂₀ alkyl, C₂ -C₂₀ alkenyl and C₇ -C₂₀ alkylaryl, said monovalent organic radical optionally containing oxygen and/or silicon atoms as substituents which are not bonded directly to the cyclopentadienyl ring moiety;
R^{2'}and R^{3'} bonded to R¹ at position 2 are, independently, hydrogen or a radical Rₐ, wherein Rₐ is as defined above;
wherein at least one of R² and R³ is Rₐ, and
   when R² is Rₐ, then R^{2'} is H, or
   when R³ is Rₐ, then R^{3'} is H, and
   when R² and R³ independently are both Rₐ then R^{2'} and R^{3'} are simultaneously H, with the proviso that
      when R^{2'} and R^{3'} are simultaneously hydrogen, then R² and R³ are not simultaneously methyl (Me), iso-propyl (i-Pr) or tert-butyl (t-Bu) for rac isomer; or
      when R^{2'} and R^{3'} are simultaneously hydrogen, M is Zr or Hf, X¹ and X² are both Cl and Q is =SiMe₂, then R² and R³ are not simultaneously pentenyl for rac and meso isomers;
      or when R^{2'} and R^{3'} are simultaneously hydrogen, M is Zr, X¹ and X² are both Cl and Q is =SiMe₂, then R² and R³ are not simultaneously para-tolyl for rac and meso isomers;
   or when R² is H then R³ is not Me, or when R² is Me then R³ is not H for rac and meso isomers;
   or when R², R^{2'}, R^{3'} are H, M is Zr, X¹ and X² are both Cl and Q is =SiMe₂, then R³ is not benzyl, or when R² is benzyl, R^{2'} and R^{3'} are both H, M is Zr, X¹ and X² are both Cl and Q is =SiMe₂, then R³ is not H for rac and meso isomers; and
X¹ and X² are independently, monovalent ligands selected from hydrogen, halogen, C₁ -C₂₀ alkyl, C₆-C₂₀ aryl, C₇-C₂₀ alkylaryl, C₇-C₂₀ arylalkyl, C₁-C₂₀ hydrocarbyloxy, C₆-C₂₀ aryloxy, C₁-C₂₀ di(alkyl)amido and carboxylate;
its racemic or meso stereoisomers and mixtures thereof.

In a particular class of compounds of formula (I), M is Zr.

Each R¹ is an indenyl ligand, at least one of them being substituted at position 3 by Rₐ, wherein Rₐ is that previously defined. Examples of the group Rₐ include methyl, ethyl, propyl, butyl, pentyl and hexyl. When one of R² and R³ is Rₐ, the other one may be hydrogen or Rₐ (equal or different).

In certain cases, each R¹ can be also substituted at position 2 with Rₐ, wherein Rₐ is that previously defined; however, when R² and R³ are, independently, Rₐ, then R^{2'} and R^{3'} are simultaneously hydrogen, subjected to the previously mentioned provisos.

The benzene ring of the R¹ indenyl ligand may be optionally substituted with one to four, preferably one or two, substituents. Suitable substituents include C₁₋C₂₀ alkyl, C₆-C₂₀ aryl, or combinations thereof, with methyl or phenyl being preferred. The substituents may be the same or different from each other.

Q is a divalent group of formula =SiR⁴R⁵ or -CHR⁴⁻CHR⁵-, wherein R⁴ and R⁵ are those previously defined; for example, Q is a phenylmethylsilanediyl group, a dimethyl-silanediyl group or an 1,2-ethanediyl group.

In one particular class of compounds of formula (I), X¹ and X² are both, simultaneously, halogen, such as Cl.

The following compounds are illustrative but non-limiting examples of useful bridged metallocene catalysts containing 3-substituted-indenyl ligands:
Meso dimethylsilanediylbis(1-indenyl-3-methyl) zirconium dichloride,
Rac and meso dimethylsilanediylbis(1-indenyl-3-ethyl) zirconium dichloride,
Rac and meso dimethylsilanediylbis(1-indenyl-3-propyl) zirconium dichloride,
Rac and meso dimethylsilanediylbis(1-indenyl-3-butyl) zirconium dichloride,
Rac and meso dimethylsilanediylbis(1-indenyl-3-pentyl) zirconium dichloride,
Rac and meso dimethylsilanediylbis(1-indenyl-3-hexyl) zirconium dichloride,
Rac and meso 1,2-ethanediylbis(1-indenyl-3-ethyl) zirconium dichloride,
Rac and meso 1,2-ethanediylbis(1-indenyl-3-propyl) zirconium dichloride,
Rac and meso 1,2-ethanediylbis(1-indenyl-3-butyl) zirconium dichloride,
Rac and meso 1,2-ethanediylbis(1-indenyl-3-pentyl) zirconium dichloride,
Rac and meso 1,2-ethanediylbis(1-indenyl-3-hexyl) zirconium dichloride,
Rac and meso dimethylsilanediyl(1-indenyl)(1-indenyl-3-ethyl) zirconium dichloride,
Rac and meso dimethylsilanediyl(1-indenyl)(1-indenyl-3-propyl) zirconium dichloride,
Rac and meso dimethylsilanediyl(1-indenyl) (1-indenyl-3-butyl) zirconium dichloride,
Rac and meso dimethylsilanediyl(1-indenyl)(1-indenyl-3-pentyl) zirconium dichloride,
Rac and meso dimethylsilanediyl(1-indenyl)(1-indenyl-3-hexyl) zirconium dichloride,
Rac and meso 1,2-ethanediyl(1-indenyl)(1-indenyl-3-methyl) zirconium dichloride,
Rac and meso 1,2-ethanediyl(1-indenyl)(1-indenyl-3-ethyl) zirconium dichloride,
Rac and meso 1,2-ethanediyl(1-indenyl)(1-indenyl-3-propyl) zirconium dichloride,
Rac and meso 1,2-ethanediyl(1-indenyl)(1-indenyl-3-butyl) zirconium dichloride,
Rac and meso 1,2-ethanediyl(1-indenyl)(1-indenyl-3-pentyl) zirconium dichloride,
Rac and meso 1,2-ethanediyl(1-indenyl)(1-indenyl-3-hexyl) zirconium dichloride,
Rac and meso phenylmethylsilanediyl(1-indenyl)(1-indenyl-3-methyl) zirconium dichloride,
Rac and meso phenylmethylsilanediyl(1-indenyl)(1-indenyl-3-ethyl) zirconium dichloride,
Rac and meso phenylmethylsilanedyil(1-indenyl)(1-indenyl-3-propyl) zirconium dichloride,
Rac and meso phenylmethylsilanediyl(1-indenyl)(1-indenyl-3-butyl) zirconium dichloride,
Rac and meso phenylmethylsilanediyl(1-indenyl)(1-indenyl-3-pentyl) zirconium dichloride,
Rac and meso phenylmethylsilanediyl(1-indenyl)(1-indenyl-3-hexyl) zirconium dichloride,
Rac and meso dimethylsilanediyl(1-indenyl-3-methyl)(1-indenyl-3-ethyl) zirconium dichloride,
Rac and meso dimethylsilanediyl(1-indenyl-3-methyl)(1-indenyl-3-propyl) zirconium dichloride,
Rac and meso dimethylsilanediyl(1-indenyl-3-methyl)(1-indenyl-3-butyl) zirconium dichloride,
Rac and meso dimethylsilanediyl(1-indenyl-3-methyl)(1-indenyl-3-pentyl) zirconium dichloride,
Rac and meso dimethylsilanediyl(1-indenyl-3-methyl)(1-indenyl-3-hexyl) zirconium dichloride,
Rac and meso dimethylsilanediyl(1-indenyl-3-ethyl)(1-indenyl-3-propyl) zirconium dichloride,
Rac and meso dimethylsilanediyl(1-indenyl-3-ethyl)(1-indenyl-3-butyl) zirconium dichloride,
Rac and meso dimethylsilanediyl(1-indenyl-3-ethyl)(1-indenyl-3-pentyl) zirconium dichloride,
Rac and meso dimethylsilanediyl(1-indenyl-3-ethyl)(1-indenyl-3-hexyl) zirconium dichloride,
Rac and meso 1,2-ethanediyl(1-indenyl-3-methyl)(1-indenyl-3-ethyl) zirconium dichloride,
Rac and meso 1,2-ethanediyl(1-indenyl-3-methyl)(1-indenyl-3-propyl) zirconium dichloride,
Rac and meso 1,2-ethanediyl(1-indenyl-3-methyl)(1-indenyl-3-butyl) zirconium dichloride,
Rac and meso 1,2-ethanediyl(1-indenyl-3-methyl)(1-indenyl-3-pentyl) zirconium dichloride,
Rac and meso 1,2-ethanediyl(1-indenyl-3-methyl)(1-indenyl-3-hexyl) zirconium dichloride,
Rac and meso 1,2-ethanediyl(1-indenyl-3-ethyl)(1-indenyl-3-propyl) zirconium dichloride,
Rac and meso 1,2-ethanediyl(1-indenyl-3-ethyl)(1-indenyl-3-butyl) zirconium dichloride,
Rac and meso 1,2-ethanediyl(1-indenyl-3-ethyl)(1-indenyl-3-pentyl) zirconium dichloride,
Rac and meso 1,2-ethanediyl(1-indenyl-3-ethyl)(1-indenyl-3-hexyl) zirconium dichloride,
Rac and meso dimethylsilanediyl(1-indenyl-3-methyl)(1-indenyl-3-ethyl-4,7-dimethyl) zirconium dichloride,
Rac and meso dimethylsilanediyl(1-indenyl, 3-methyl)(1-indenyl- 3-propyl, 4,7-dimethyl) zirconium dichloride,
Rac and meso dimethylsilanediyl(1-indenyl-3-methyl)(1-indenyl-3-butyl-4,7-dimethyl) zirconium dichloride,
Rac and meso dimethylsilanediyl(1-indenyl-3-methyl)(1-indenyl-3-ethyl-4-phenyl) zirconium dichloride,
Rac and meso dimethylsilanediyl(1-indenyl-3-methyl)(1-indenyl-3-propyl-4-phenyl) zirconium dichloride,
Rac and meso dimethylsilanediyl(1-indenyl-3-methyl)(1-indenyl-3-butyl-4-phenyl) zirconium dichloride,
Rac and meso dimethylsilanediyl(1-indenyl-3-ethyl)(1-indenyl-3-propyl-4-phenyl) zirconium dichloride,
Rac and meso dimethylsilanediyl(1-indenyl-3-ethyl)(1-indenyl-3-butyl-4-phenyl) zirconium dichloride,
Rac and meso dimethylsilanediyl(1-indenyl-3-ethyl)(1-indenyl-3-propyl-4,7-dimethyl) zirconium dichloride,
Rac and meso dimethylsilanediyl(1-indenyl-3-ethyl)(1-indenyl-3-butyl-4,7-dimethyl) zirconium dichloride,
Rac and meso dimethylsilanediyl(1-indenyl-2-methyl)(1-indenyl-3-methyl) zirconium dichloride,
Rac and meso dimethylsilanediyl(1-indenyl-2-methyl)(1-indenyl-3-ethyl) zirconium dichloride,
Rac and meso dimethylsilanediyl(1-indenyl-2-methyl)(1-indenyl-3-propyl) zirconium dichloride,
Rac and meso dimethylsilanediyl(1-indenyl-2-ethyl)(1-indenyl-3-ethyl) zirconium dichloride,
Rac and meso dimethylsilanediyl(1-indenyl-2-ethyl)(1-indenyl-3-propyl) zirconium dichloride,
Rac and meso 1,2-ethanediyl(1-indenyl-2-methyl)(1-indenyl-3-propyl) zirconium dichloride,
Rac and meso 1,2-ethanediyl(1-indenyl-2-ethyl)(1-indenyl-3-ethyl) zirconium dichloride, and
Rac and meso 1,2-ethanediyl(1-indenyl-2-ethyl)(1-indenyl-3-propyl) zirconium dichloride.

In a particular embodiment the invention relates to a racemic stereoisomer of the bridged metallocene compound of formula (I) described above wherein the stereoisomer is represented by formula (II): 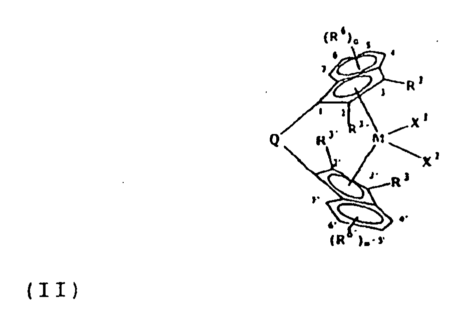 wherein:
M, R², R³, R^{2'}, R^{3'}, Q, X¹ and X² are those previously defined in connection with the compound of formula (I);
R⁶ and R⁶' are, independently, methyl or phenyl; and
n and n' are, independently, 0, 1 or 2, being n and n' preferably 0.

In one particular class of compounds of formula (II), M is Zr.

At least one of each R¹ is substituted at position 3 by Rₐ, wherein Rₐ is that previously defined in connection with the compound of formula (I). Examples of the group Rₐ include methyl, ethyl, propyl, butyl, pentyl and hexyl. When one of R² and R³ is Rₐ, the other one may be hydrogen or Rₐ (equal or different). In certain cases, each R¹ can be also substituted at position 2 with Rₐ, wherein Rₐ is that previously defined; however, when R² and R³ are, independently, Rₐ, then R^{2'} and R^{3'} are simultaneously hydrogen, subjected to the previously mentioned provisos, i.e., when R^{2'} and R^{3'} are simultaneously hydrogen, then R² and R³ are not simultaneously Me, i-Pr or t-Bu. In addition, when R² is hydrogen then R³ is not Me or when R² is Me then R³ is not hydrogen.

The benzene ring of the R¹ indenyl ligand may be optionally substituted with one or two substituents. Suitable substituents include methyl, phenyl or combinations thereof. The substituents may be the same or different from each other.

Q is a divalent group of formula =SiR⁴R⁵ or -CHR⁴⁻CHR⁵-, wherein R⁴ and R⁵ are those previously defined in connection with the compound of formula (I); for example, Q is a phenylmethylsilanediyl group, a dimethylsilanediyl group or an 1,2-ethanediyl group.

In a particular class of compounds of formula (II), X¹ and X² are both, simultaneously, halogen, such as Cl.

In another embodiment the invention relates to a meso stereoisomer of the bridged metallocene compound described above wherein the stereoisomer is represented by formula (III): 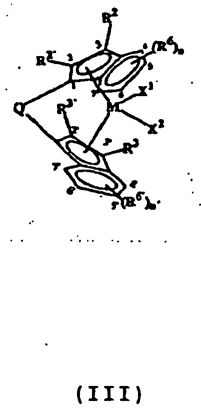 wherein:
M, R², R³, R^{2'}, R^{3'}, Q, X¹ and X² are those previously defined in connection with the compound of formula (I);
R⁶ and R⁶' are, independently, methyl or phenyl; and
n and n' are, independently, 0, 1 or 2, being n and n' preferably 0.

In a particular class of compounds of formula (III), M is Zr.

At least one of each R¹ is substituted at position 3 by Rₐ, wherein Rₐ is that previously defined in connection with the compound of formula (I). Examples of the group Rₐ include methyl, ethyl, propyl, butyl, pentyl and hexyl. When one of R² and R³ is Rₐ, the other one may be hydrogen or Rₐ (equal or different). In certain cases, each R¹ can be also substituted at position 2 with Rₐ, wherein Rₐ is that previously defined; however, when R² and R³ are, independently, Rₐ, then R^{2'} and R^{3'} are simultaneously hydrogen, subjected to the previously mentioned provisos, i.e., when R² is hydrogen then R³ is not Me or when R² is Me then R³ is not hydrogen.

The benzene ring of the R¹ indenyl ligand may be optionally substituted with one or two substituents. Suitable substituents include methyl, phenyl or combinations thereof. The substituents may be the same or different from each other.

Q is a divalent group of formula =SiR⁴R⁵ or -CHR⁴⁻CHR⁵-, wherein R⁴ and R⁵ are those previously defined in connection with the compound of formula (I); for example, Q is a phenylmethylsilanediyl group, a dimethyl-silanediyl group or an 1,2-ethanediyl group.

In a particular class of compounds of formula (III), X¹ and X² are both, simultaneously, halogen, such as Cl.

For the purpose of this invention by "use of pure racemic or meso stereoisomers" regarding polymerization it is meant the utilization of substantially pure samples of the corresponding isomer containing from about 0 to about 10 percent molar proportion of the other isomer.

Another aspect of the present invention relates to a composition comprising a mixture of at least one racemic stereoisomer of formula (IIa) and at least one meso stereoisomer of formula (IIIa) 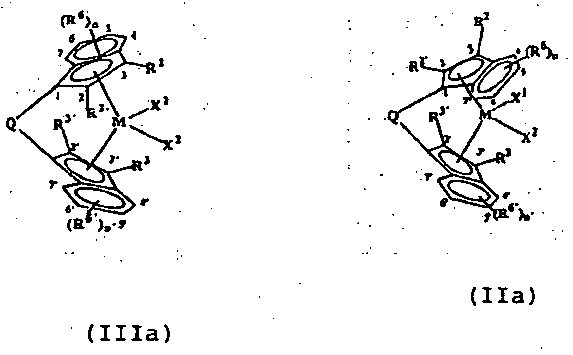 wherein:
M, Q, X¹ and X² are those defined above in connection with the compound of formula (I);
R² and R³ bonded to the indenyl ligand at position 3 are, independently, hydrogen or a radical Rₐ, wherein Rₐ is a monovalent organic radical selected from C₁-C₂₀ alkyl, C₂-C₂₀ alkenyl and C₇-C₂₀ alkylaryl, said monovalent organic radical optionally containing one or more oxygen and/or silicon atoms, preferably one or two oxygen atoms and/or one or two silicon atoms, as substituents which are not bonded directly to the cyclopentadienyl ring moiety;
R^{2'} and R^{3'} bonded to the indenyl ligand at position 2 are, independently, hydrogen or a radical Rₐ, wherein Rₐ is as defined above;
   wherein at least one of R² and R³ is Rₐ, and
   when R² is Rₐ, then R^{2'} is H,
   when R³ is Rₐ, then R^{3'} is H, and
   when R² and R³ independently are Rₐ, then R^{2'} and
R^{3'} are simultaneously H;
R⁶ and R^{6'} are, independently, methyl or phenyl; and
n and n' are, independently, 0, 1 or 2, being n and n' preferably 0.

In one particular embodiment, the composition comprises a compound of formula (IIa) and/or a compound of formula (IIIa) wherein M is Zr.

In other particular embodiment, the composition comprises a compound of formula (IIa) and/or a compound of formula (IIIa) wherein at least one of each indenyl ligand is substituted at position 3 by Rₐ, wherein Rₐ is that previously defined in connection with the compound of formula (I), such as, methyl, ethyl, propyl, butyl, pentyl or hexyl. In addition, in certain cases, each indenyl ligand can be also optionally substituted at position 2 with Rₐ, wherein Rₐ is that previously defined; however, when R² and R³ are, independently, Rₐ, then R^{2'} and R^{3'} are simultaneously hydrogen, subjected to the previously mentioned provisos. The benzene ring of the indenyl ligand may be optionally substituted with one or two substituents such as methyl or phenyl. The substituents may be the same or different from each other.

In another particular embodiment, the composition comprises a compound of formula (IIa) and/or a compound of formula (IIIa) wherein Q is a divalent group of formula =SiR⁴R⁵ or -CHR⁴-CHR⁵-, wherein R⁴ and R⁵ are those previously defined in connection with the compound of formula (I); for example, Q is a phenylmethylsilanediyl group, a dimethyl-silanediyl group or an 1,2-ethanediyl group.

In another particular embodiment, the composition comprises a compound of formula (IIa) and/or a compound of formula (IIIa) wherein X¹ and X² are both, simultaneously, halogen, such as Cl.

In another particular embodiment, the composition comprises a mixture of both at least one racemic stereoisomer of previously shown formula (II) and at least one meso stereoisomer of previously shown formula (III).

The inventive bridged 3-substituted-indenyl metallocene compounds of the instant invention can be prepared by one or several methods. The method of manufacture is not critical. One method comprises first reacting two equivalents of a substituted indene (see for example Ready T.E., Chien J.C.W. and Rausch M.D., J. Organomet. Chem. 583 (1999) 11-27) with a metallic deprotonating agent such as an alkyllithium or potassium hydride in an organic solvent such as diethylether or tetrahydrofuran followed by reaction of this metallated indene with a solution of a doubly-halogenated compound such as for example dichlorodimethylsilane or 1,2-dibromo-ethane. The resulting ligand is then isolated by known methods to those skilled in the art (distillation, chromatography, or the like) or it can be used as it is obtained if found of practical purity.

Alternatively the indenyl ligands can be made by making first a silicon or ethanediyl bridged (nonsubstituted)-indenyl compound, such as dimethylsilanediylbis-indene or 1,2-ethanediylbisindene compounds well known in the art, and then reacting said ligands with two equivalents of a metallic deprotonating agent such as an alkyllithium or potassium hydride in a suitable solvent in order to obtain its dilithium or dipotassium salt. The optionally desired substituted ligand can be obtained after reaction of the dimetallic salt of the nonsubstituted bridged ligands with two equivalents of a suitable alkylhalide.

The isolated bridged 3-substituted-indenyl ligand is again reacted with two equivalents of a metallic deprotonating reagent, such as an alkyllithium or potassium hydride in an appropriate solvent, and then reacted with one mol of titanium tetrachloride, zirconium tetrachloride or hafnium tetrachloride or some suitable adduct with ethers like diethyl ether tetrahydrofurane and the like in order to obtain the corresponding metallocene. The resulting bridged 3-substituted-indenyl metallocene compound can be recovered and purified by using conventional techniques known in the art including filtration, extraction, crystallization and recrystallization.

Another aspect of the present invention relates to a polymerization catalyst system comprising at least one bridged 3-substituted-indenyl metallocene compound or a composition as described above in combination with one or more suitable co-catalyst. Preferred co-catalysts include generally any of those type of compounds which are known in the art suitable to be employed in conjunction with transition metallocene-type olefin polymerization catalysts including aluminoxanes, modified aluminoxanes, non coordinating anions, compounds capable of forming alkyl metallocene cations and the like. It is within the scope of this invention to use aluminoxane or modified aluminoxane as co-catalysts and/or also ionizing activators, neutral or ionic, such as tetrakis(pentafluorophenyl)boron salts or tris(pentafluorophenyl)boron metalloid precursors.

The currently most preferred co-catalyst or activator (both terms being used indistintively herein) is methylaluminoxane (MAO) or modified methylaluminoxane (MMAO). Aluminoxanes are well known in the art and comprise oligomeric linear or cyclic alkyl compounds having, respectively, the following formulae:
- for oligomeric linear alkyl aluminoxanes:

   R-(AlR-O)ₓ- AlR₂
- for oligomeric cyclic alkyl aluminoxanes:

   (-AlR-O)ₙ
wherein x is 1-40, preferably 10-20 , n is 3-40, preferably 3-20 , and R is an alkyl group containing 1 to 12 carbon atoms, preferably methyl . In the case of MAO, R in the two formulae is methyl. For MMAO, R is a mix of methyl and C₂-C₁₂ alkyl groups from 2 to 12 carbon atoms.

Aluminoxanes are commercially available and can be prepared by a variety of methods, non-limiting examples thereof are disclosed in, for example, EP561476; EP279586; EP594218; US4,665,208; EP372483 and EP0403830. Modified methylaluminoxanes which contain both methyl groups and higher alkyl groups can be synthesized as disclosed in, for example, US5,041,584.

The mole ratio of aluminium atoms contained in the aluminoxane, such as MAO or MMAO, to metal atoms contained in the bridged metallocene catalyst of the instant invention is generally in the range of 1:1 to about 100,000:1, more preferably from 5:1 to 10,000:1 and most preferably in the range of 20:1 to 2,000:1.

The bridged 3-substituted-indenyl metallocene compounds of the instant invention, their rac or meso steroisomers and mixtures thereof, when used in combination with an appropriate co-catalyst, such as an aluminoxane, are particularly useful for the (co)polymerization of olefins, such as for the polymerization of C₂-C₂₀ alpha-olefins or for the copolymerization of ethylene and C₃-C₂₀ alpha-olefins. Examples of such olefins include propylene, 1-butene, 1-pentene, 1-hexene, 1-octene and mixtures thereof.

The polymerizations can be carried out under a wide range of conditions. The temperatures may be in the range from about 20°C to about 250°C, preferably from about 50°C to about 200°C and the pressures employed may be in the range from about 1 atmosphere to about 1,000 atmospheres or higher.

Such polymerizations can be carried out in a homogeneous system in which the catalyst and co-catalysts are soluble; however, in one preferred embodiment, the polymerization is carried out in the presence of a supported or insoluble particulate form of the catalyst and/or co-catalyst.

Thus, in another aspect, the invention relates to an heterogeneous polymerization catalyst system which comprises the previously defined polymerization catalyst system (which comprises at least one bridged 3-substituted-indenyl metallocene compound of the instant invention, its rac or meso isomer or a mixture thereof, or a composition provided by the instant invention in combination with one or more suitable co-catalyst) and a support.

By support or carrier is meant any solid, preferably, a porous inorganic material, for example inorganic oxides or inorganic chlorides. Other carriers could include polymeric support materials such as polystyrene divinylbenzene polymeric compounds.

Preferred supports include silica, alumina, silica-alumina, aluminophosphates and magnesium chloride although other materials like silica-chromium, silica-titania and clay minerals may also be useful as well.

Most preferred support is an inorganic oxide having a surface area in the range of from about 15 m²/g to about 600 m²/g, pore volume in the range of from about 0.1 cm³/g to about 3,5 cm³/g and average particle size in the range of from about 5 microns to about 300 microns. More preferably, the surface area of the carrier is in the range of from about 50 m²/g to about 500 m²/g, pore volume in the range of from about 0.5 cm³/g to about 3,5 cm³/g, and average particle size in the range of from about 5 microns to about 100 microns.

There are many examples and methods known in the art for supporting the metallocene-type polymerization catalyst systems of the invention such as those disclosed in, for example, US4,701,432; US4,808,561; US5,240,894; and US5,332,706.

Supported polymerization catalyst systems prepared with the bridged 3-substituted-indenyl metallocene compounds of the instant invention can be made by several methods such as by the addition of a solution of said metallocene compound in a suitable non polar solvent such as toluene on a solid support containing the co-catalyst previously supported on an inorganic oxide or alternatively by the addition of a mixture of the metallocene compound and the co-catalyst directly to a dehydrated inorganic oxide support or combination of both by depositing the mixture of the metallocene compound and the co-catalyst on a solid support containing an additional co-catalyst previously supported on the inorganic oxide support. In all cases, after suitable contact time of any solution and any solid component, the solvent is eliminated, usually under partial vacuum, until a free flowing powder is finally obtained.

In one preferred method for producing the supported polymerization catalyst system of the invention such as that described in the non-limiting examples below, a solution containing the co-catalyst is added to a solution or slurry of the bridged 3-substituted-indenyl metallocene compound. Most preferred solvents include aromatic solvents such as toluene but other cyclic aliphatic or isoaliphatic solvents may be also used when capable of maintaining the mixture under solution.

The mixture comprising the co-catalyst and the metallocene compound is made to react first and then added to a porous support to form a slurry or a thick mixture and stirred preferably during enough time allowing for the solution and its components to diffuse into the pores of the solid support. Finally, solvent is evaporated to yield a free flowing powder. Optionally, heat may be applied during stirring or mixing of the solid-liquid mixture described above or during stripping off the solvent. In a particular embodiment, wherein the co-catalyst is an aluminoxane or a modified aluminoxane, the co-catalyst/metallocene compound mixture comprises aluminoxane or modified aluminoxane and the molar ratio of the aluminium contained in the co-catalyst to the metal contained in the metallocene compound is in the range of between 3:1 to 1000:1, preferably 20:1 to 700:1 and most preferably 50:1 to 400:1.

The bridged 3-substituted-indenyl metallocene compounds, compositions and polymerization catalyst systems of the present invention are suitable for use in any olefin polymerization process over a wide range of temperatures and pressures. Olefin polymerization processes include solution, gas phase, slurry phase and a high pressure process. Particularly preferred polymerization process includes slurry phase or gas phase polymerization of one or more alpha-olefins, such as ethylene or propylene.

Thus, another aspect of the instant invention relates to the use of the polymerization catalyst system provided by the instant invention in a process for (co)polymerization of olefins, such as for polymerization of C₂-C₂₀ alpha-olefins or for copolymerization of ethylene and C₃-C₂₀ alpha-olefins.

Another aspect of this invention relates to a process for the (co)polymerization of olefins, such as for the polymerization of C₂-C₂₀ alpha-olefins or for the copolymerization of ethylene and C₃-C₂₀ alpha-olefins which comprises the use of the polymerization catalyst system previously defined provided by the instant invention.

It is within the scope of the invention to use a mixture of two or more bridged 3-substituted-indenyl metallocene compounds provided by the instant invention which in turn may be in the form of substantially pure isomers (rac or meso isomers) or in the form of mixtures thereof (rac and meso isomers).

In a particular embodiment, a copolymer of ethylene is produced wherein ethylene is polymerized with a comonomer, said comonomer being selected from at least one alpha-olefin having from 3 to 12 carbon atoms, more preferably from 3 to 8 carbon atoms, for example, propylene, 1-butene, 1-hexene, 1-octene and mixtures thereof, in a slurry process.

In a slurry polymerization process, a suspension of solid, particulate polymer is formed in a liquid polymerization diluent including propane, butane, isobutane, pentane, hexane, heptane and the like to which ethylene and comonomer and optionally hydrogen along with catalyst are added. The suspension including the diluent is intermitently removed from the reactor where volatile components are separated from the polymer and recycled optionally after separation to the reactor.

In one preferred polymerization technique, the catalyst is added in solid form in such a way referred to as particle form polymerization and the temperature is kept below the temperature at which the polymer goes into solution, therefore the polymer is maintained under slurry phase. Such technique is well known in the state of art and disclosed for example in US3,248,179. Typical slurry processes include those employing a loop reactor and those utilizing several stirred reactor in series, parallel or combination thereof such as continuous loop or stirred tank process.

Specific polymers and copolymers of desirable molecular weight and molecular weight distribution can be optionally obtained without the use of hydrogen as a molecular weight regulator, simply by means of a proper selection of the indenyl substituent within the bridged 3-substituted-indenyl metallocene compound of the present invention yielding precisely targeted products. Use of hydrogen is typically needed when using other bridged indenyl-containing metallocenes of the previous state of art for preparation of ethylene-based polymers and copolymers with MI from about 1 to about 7 or higher. Avoiding the use of hydrogen when metallocene compounds are used as polymerization catalysts is usually highly advantageous in practice because it avoids the need of fine regulation and control of said extra component within the polymerization feed and also because other frequently observed negative effects in industrial practice when hydrogen is used such as increase of fines production and decrease of catalyst comonomer incorporation efficiency. Nevertheless, hydrogen can optionally be used with the polymerization system of the present invention for making also targeted products by selection of certain specifically also provided metallocenes being another alternative choice.

The polymer (homopolymer or copolymer) produced by the process provided by the present invention according to a particular embodiment, is an ethylene-based polymer or copolymer having narrow or broad molecular weight distribution, narrow bimodal molecular weight distribution or broad bimodal molecular weight distribution. Said polymer has a wide range of uses that will be apparent to those skilled in the art. In a particular embodiment, said polymer is a polyethylene resin produced by the process provided by the instant invention.

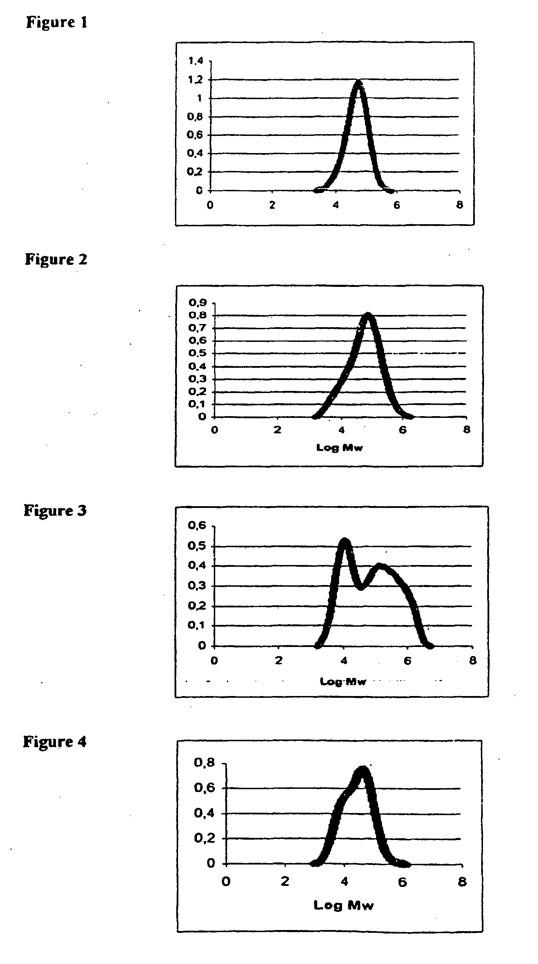

The polymers produced by the process of the instant invention have a wide variety of molecular weight distribution ranging from:
Type I: Narrow, with a polidispersity index (Mw/Mn) from around 1.9 to about 3.5 preferably obtained with bridged 3-substituted-indenyl metallocene compounds of the instant invention in the form of substantially pure isomers like shown in Figure 1.
Type II: Broad with Mw/Mn greater than 2 to about 8 more preferably from 2.5 to about 8 more preferably from about 3 to about 5 preferably obtained with appropriate racemic/meso mixtures of selected bridged 3-substituted-indenyl metallocene compounds of the instant invention wherein the substituent comprises a chain which is longer than ethyl as shown in Figure 2.
Type III: Bimodal with high polydispersity index with values of Mw/Mn from about 10 to about 25 like shown in Figure 3, preferably obtained with appropriate racemic/meso mixtures of selected bridged 3-substituted-indenyl metallocene compounds of the instant invention wherein, preferably, the substituent comprises a short chain such as methyl or ethyl.
Type IV: Bimodal with low polydispersity index with values of Mw/Mn from about 2.5 to about 5 like shown in Figure 4, preferably obtained with rac and meso mixtures of bridged 3-(mono)substituted-indenyl metallocene compounds of the instant invention.

In a particular embodiment, the polymers of the present invention have a melt index (MI) or I₂ as measured by ASTM-D-1238-E in the range from about 0.01 to 400 g/10 min, more preferably from about 0.01 to about 100 g/10 min even more preferably from about 0.1 to about 40 g/10 min and most preferably from about 0.1 g/10 min to 25 g/10 min.

In another particular embodiment, the polymers of the present invention have a melt index ratio (I₂₁/I₂) from about 15 to less than 25 (I₂₁ is measured by ASTM-D-1238-F). In another embodiment, said polymers have, preferably, a melt index ratio comprised between more than 20 to about more than 60 up to about 80, preferably from about 25 to about 60.

In another particular embodiment, said polymer, such as an ethylene-based polymer or copolymer, has a polydispersity index from about 2 to about 22, and MI values from about 0 to about 50,preferably from about 0,1 to about 20 and even more preferably from about 0,2 to about 15 .

### EXAMPLES

For a further understanding of the present invention, its various aspects and advantages, the following examples are provided.

Preparation of the metallocenes and all of others operations handling them and also cocatalyst in polymerization operations were carried out routinely using Schlenk techniques and performing some particular sensitive operations inside a dry box, in every case with strict exclusion of air and moisture by means of dried inert gas and using solvents dried over molecular sieve.

Size Exclusion Chromatography (SEC) measurements were performed at 145°C in a Waters 150C equipment, with solvent 1,2,4-TCB and 0.04% by weight (wt) of Irganox 1010 as stabilizer. A set of PL gel columns (10⁶, 2 x mixed bed 10 microns) was used. Operating conditions were as follows: flow rate 0.7 mL/min, sample concentration 5 mg/mL, and injection volume 500 microliters. Twelve samples of polystyrene with narrow molecular weights (ranging from 1,800 to 2,300,000) were used as standards, considering the elution volume at the peak representative of the sample. A differential refractive index (DRI) detector and a differential viscometer Viscotek 150, working at 145°C, were coupled on line at the end of the columns. A validation of the calibration curve is made using internal standards and other standard (NIST 1475, Mw: 53,070 and broad polidispersity).

Flow index (FI) is reported as grams per 10 minutes and is determined in accordance with ASTM D-1238, condition F, and is measured at ten times the weight used in the melt index.

Melt indexes (MI) are reported as grams per 10 minutes, determined in accordance with ASTM D-1238, condition E, at 190°C.

MFR is the melt flow ratio, which is the ratio of flow index to melt index and is related with molecular weight distribution.

### I. Preparation of ligands

### I.A. Preparation of disubstituted symmetric ligands [Me₂Si (3-R-C₉H₆)₂]; R = CH₃ (1) , CH₂CH₃ (2) , CH₂CH₂CH₃ (3), CH₂CH₂CH₂CH₃ (4) , or CH₂C₆H₅ (5) [(3-R-C₉H₆)-CH₂-CH₂-(3-R-C₉H₆)]; R = CH₂CH₃ (6) or CH₂CH₂CH₂CH₃ (7)

### General procedure:

### Preparation of ligand (1)

To a solution of (C₉H₈) (6.00 g, 51.65 mmol) in Et₂O, n-BuLi in hexane is added dropwise (1.60 M ) (38.74 ml, 61.98 mmol) at -78°C. After addition is finished, temperature is allowed to raise and stirring is continued for an additional 4 hour period at room temperature. Temperature is lowered again at -78°C and SiMe₂Cl₂ (3.33 g, 25.83 mmol), is dropwise added. Resulting suspension is maintained for 15 hours under stirring allowing the temperature to raise at the end of addition until room temperature is reached. Solvent is stripped off under low pressure and the residue extracted with hexane (2 x 50 ml) yielding [Me₂Si(C₉H₆)₂] (7.37 g, 98%) as a yellow oil.

[Me₂Si(C₉H₆)₂] (7.37 g, 25.55 mmol) is dissolved in Et₂O and n-BuLi (1.60 M in hexane) (38.33 ml, 61.33 mmol) is added dropwise at low temperature (-78°C).When addition is finished, temperature is allowed to raise until room temperature and reaction mixture is maintained under stirring for an additional 4 hour period. CH₃I (14.50 g, 102.20 mmol), is dropwise added over at -78°C, and stirring is maintained after addition is finished for 15 more hours at room temperature. Solvent and other volatile components are stripped off under vacuum and the residue extracted with hexane. The desired compound (1) is obtained after elimination of solvent as a yellow oil (7.11 g, 88%).

### Preparation of ligands (2), (3), (4) and (5)

Preparation of ligands **(2), (3), (4)** and **(5)** was carried out similarly to the preparation of ligand **(1)** described above from the dilithium salt of [Me₂Si(C₉H₆)₂] and an excess (40% over stoichiometric) of corresponding ethyl, propyl, butyl or benzyl bromide. Ligands were finally isolated as yellow oils in aproximately 85% yields.

### Preparation of ligands (6) and (7)

C₉H₇-CH₂CH₃ and C₉H₇-CH₂CH₂CH₂CH₃ were prepared first by a similar method as that described in T. E. Ready et al., J. Organometallic Chemistry 519(1996) 21-28 as follows.

To a solution of (C₉H₈) (30 g, 0,258 mmol) in 150 ml diethylether, n-BuLi (1.60 M in hexane) (193.7 ml, 0.31 mmol) is dropwise added at -78°C under stirring. After the addition was completed, the mixture was allowed to warm to room temperature and stirring was maintained for an aditional 4 hour period. After cooling again at -78°C ethylbromide or n-butylbromide (31 mmol) respectively was dropwise added, temperature was allowed to raise after addition was finished and stirring maintained 15 more hour at room temperature. Stripping off the solvent under reduced pressure and extraction of the residue with 100 ml hexane yielded the desired 3-R-C₉H₇ [R = CH₂CH₃ or CH₂CH₂CH₂CH₃] compound after final solvent removal (80% yield). Final purification was made by distillation, recovering the fraction distilled at 60-70°C at 3 mbar for C₉H₇-CH₂CH₃ and 60°C at 1 mbar for C₉H₇-CH₂CH₂CH₂CH₃.

Corresponding bridging ligands were next prepared as follows. Over a cold ether/THF solution (100 ml/20 ml) of C₉H₇-CH₂CH₂CH₂CH₃ (34 g, 0.2 moles) and C₉H₇-CH₂CH₃ (29 g; 0.2 moles) maintained at -10°C, 80 ml of 2.5 M n-BuLi in hexane was dropwise added for a 30 minute period while stirring. After addition was finished the reaction mixture was stirred 4 more hours. The resulting solution was added slowly to a 50 ml Et₂O solution of dibromoethane (19 g) kept at 0°C. After addition was finished (over 30 minutes), temperature was allowed to raise and the reaction mixture stirred at room temperature for 15 hours.

The reaction mixture was quenched by addition of 200 ml of deionized water. Organic phase was separated and dried over MgSO₄. The final products **(6)** and **(7),** respectively, were obtained after filtration and solvent removal and finally elimination of other volatile components at 90°C at 1 mbar as a viscous clear yellow oil solidifying upon cooling with 75% yield.

### I.B. Preparation of monosubstituted ligands:

### [Me₂Si(3-R-C₉H₆) (C₉H₇)]; R = CH₂CH₃ (8) or CH₂CH₂CH₃ (9)

C₉H₇-CH₂CH₂CH₃ was prepared first by a similar method as that described previously for the ethyl and n-butyl indenes. To a solution of (3-R-C₉H₇) [R=CH₂CH₃ or CH₂CH₂CH₃] (21.61 mmol) in Et₂O (100 ml) kept at - 78°C, n-BuLi (1.60 M in hexane) (16.21 ml, 25.93 mmol) was dropwise added; after addition was finished, temperature was slowly raised to room temperature and stirring was maintained for an aditional 4 hour period. The resulting suspension was slowly added to a solution of SiMe₂Cl₂ (14.00 g, 108.05 mmol) in Et₂O (25ml), at - 78°C. Temperature was allowed to raise after addition was finished and stirring was maintained 15 more hour at room temperature. Stripping off the solvent under reduced pressure and extraction of the residue with hexane (100 ml) yields the corresponding chlorosilylderivatives [ClMe₂Si(3-R-C₉H₆)] [R = CH₂CH₃ or CH₂CH₂CH₃] (yield 92%).

A solution of [Li(C₉H₇)] (2.43 g, 19.93mmol) in Et₂O (100 ml) is dropwise added over a cooled (-78°C) solution of [ClMe₂Si(3-R-C₉H₆)] [R = CH₂CH₃ or CH₂CH₂CH₃] (19.93mmol) in Et₂O (50 ml). Temperature was allowed to raise after addition was finished and stirring was maintained 15 more hours at room temperature. The reaction mixture was quenched by addition of 100 ml of deionized water. Organic phase was separated and dried over MgSO₄. The final products **(8)** and **(9),** respectively, were obtained after filtration and solvent removal as a viscuous clear yellow oil in 78% yield.

### I.C. Preparation of non-symmetric disubstituted ligands [Me₂Si (3-R'-C₉H₆) (3-R''-C₉H₆)] ; R'= CH₂CH₃, R''= CH₂CH₂CH₃ (10)

[ClMe₂Si(3-R-C₉H₆)] [R = CH₂CH₂CH₃] was made first as in B and isolated as a yellow oil.

¹H NMR(CDCl₃): delta 0.251 (s,3H,**Me**Si), 0.256 (s,3H,**Me**Si), 1.081 (t,3H,**CH₃**-CH₂), 1.788 (m,2H,CH₃-**CH₂₋**) , 2.664 (t,2H,CH₃CH₂**CH₂**), 3.690 (brs,1H,**HC₅** ring), 6.368 (s,1H,**H**,C₅ring), 7.282 (m,1H,**H** C₆ring), 7.370(m,1H,**H** C₆ ring), 7.490 (d,1H,**H** C₆ring), 7.615 (d,1H,H,C₆ ring).

Ligand (10) was made in a similar manner as to ligand (9) with the exception that a solution of [Li(C₉H₆-CH₂CH₃)] was added instead of [Li(C₉H₇)]; a yellow oil was recovered as a mixture of isomers rac/meso.

¹H NMR(CDCl₃): delta -0.44 (s,3H,m**Me**Si), -0.24 (s,3H,r**Me**Si), -0.22 (s,3H,**Me**Si), -0.02 (s,3H,m**Me**Si), 1.07 (m,3H,**CH₃**CH₂CH₂), 1.33, 1.37 (t,t,3H,**CH₃**CH₂-), 1.78 (m,2H,CH₃**CH₂**CH₂), 2.68 (m, 2H+2H, CH₃CH₂**CH₂**-,CH₃**CH₂-**) , 3.54 (brs,2H**,H¹** ring), 6.13,6.17,6.30,6.34 (s,1H**,H²** ring), 7.22, 7.35, 7.48 3(m,8H,**H⁵,H⁸,H⁶,H⁷** ring ).

### II. Preparation of metallocenes

### EXAMPLE 1

### Preparation of meso-[Zr{Me₂Si(3-CH₃-(η⁵-C₉H₅))₂}Cl₂] (11)

[Me₂Si(3-CH₃-C₉H₆)₂] (5.00 g, 15.80 mmol) was dissolved in Et₂O (100 ml) and n-BuLi (1.60 M in hexane) (23.70 ml, 37.92 mmol) was dropwise added at - 78°C under stirring. After the addition was completed temperature was slowly raised until room temperature was reached and the reaction mixture was mantained under stirring during 4 more hour yielding a yellow suspension of the dilithium salt. To a -20°C stirred and cooled ZrCl₄ suspension in toluene (3.69g, 15.80 mmol) (50 ml toluene), the dilithium salt suspension previously prepared was portionwise added and temperature kept after addition was finished during 30 minutes. Temperature was allowed to raise to room temperature and the reaction mixture stirred for 15 additional hours. A yellow-brown suspension was finally obtained. All solvents were removed in vacuo and CH₂Cl₂ (300 ml) was added to the residue, the suspension formed was filtered through dry Celite and the filtrate was concentrated in vacuo to dryness. The solid was washed with hexane (100 ml) and ethyl ether (100 ml), and the bright orange residue identified by its ¹H NMR spectrum as a mixture of rac and meso isomers. The separation of the two isomers was achieved by repeated fractional recrystallization at low temperature in toluene.

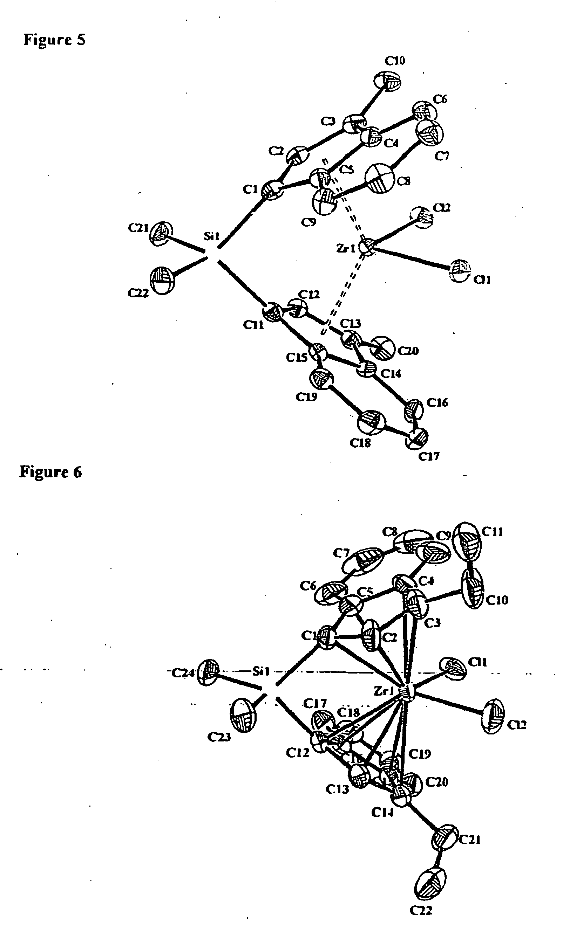

Four samples were prepared for testing with different stereoisomeric racemic:meso proportion of 5:95; 13:87; 20:80 and 53:47 (rac:meso molar proportion). The meso isomer (6:94) was obtained in 15% yield. Suitable crystals were separated and their crystal structures solved by X-Ray diffraction. ORTEP diagram is shown in Figure 5.

### EXAMPLE 2

### Preparation of rac and meso isomers of [Zr{Me₂Si(3-CH₃CH₂-(η⁵-C₉H₅))₂}Cl₂] (12)

Synthesis of compound (12) was carried out in a similar manner as that of compound **(11)** using the following reagents: [Me₂Si(3-R-C₉H₆)₂] (R=CH₂CH₃) (5.00 g, 14.03 mmol), n-BuLi (1.60 M in hexane) (21.05 ml, 33.67 mmol) and ZrCl₄ (3.27 g, 14.03 mmol). Yield: 30%.

Compound **(12)** was isolated as a mixture of racemic and meso isomers, being identified by their ¹H NMR spectra.

Two samples with different proportion of isomeric rac:meso proportions were isolated, namely, 9:91 and 50:50.

| δ(ppm) Meso isomer | δ(ppm) Rac isomer | **H** |
|---|---|---|
| | 1.10 (s, 6H) | Si(C**H**₃)₂ |
| 0.91 (s, 3H) | | Si(C**H**₃) (exo) |
| 1.36 (s, 3H) | | Si(C**H**₃) (endo) |
| 1.21 (t, 6H) | 1.11 (t, 6H) | -CH₂C**H**₃ |
| 2.80 (m, 4H) | 2.75 (m, 4H) | -C**H**₂CH₃ |
| 5.62 (s, 2H) | 5.82 (s, 2H) | **H²indene** ring |
| 6.92, 7.18 (dd, 1H) | 7.05, 7.31 (dd, 2H) | **H⁵,H⁶indene** ring |
| 7.45, 7.48 (d, 1H) | 7.45, 7.48 (d, 2H) | **H⁴,H⁷ indene** ring |

Suitable crystals of the meso isomer were grown and the crystal structure determined by X Ray difraction. ORTEP diagram is shown in Figure 6.

### EXAMPLE 3

### Preparation of rac/meso isomers of [Zr{Me₂Si(3-CH₃CH₂CH₂- (η⁵-C₉H₅))2}Cl₂] (13)

Synthesis of compound **(13)** as a rac/meso mixture of stereoisomers was carried out in a similar manner as that of compound **(11)** using the following reagents: [Me₂Si(3-R-C₉H₆)₂] (R=CH₂CH₂CH₃) (5.00 g, 14.03 mmol), n-BuLi (1.60 M in hexane) (21.05 ml, 33.67 mmol) and ZrCl₄ (3.27 g, 14.03 mmol). From the yellow-brown suspension obtained after reaction was completed, ethyl ether was removed in vacuo, the toluene solution was filtered through Celite and the retained residue washed with additional toluene (250 ml). Evaporation of toluene from the filtrate yields an orange crystalline solid identified as a mixture of rac and meso isomers of **(13)** (26% yield) by ¹H NMR analysis. Desired compound was isolated as a 59:41 rac:meso mixture.

| δ(ppm) Meso isomer | δ(ppm) Rac isomer | **H** |
|---|---|---|
| | 1.25 (s, 6H) | Si (C**H₃**) ₂ |
| 1.04 (s, 3H) | | Si(C**H₃**) (exo) |
| 1.51 (s, 3H) | | Si (C**H₃**) (endo) |
| 1.03 (t, 6H) | 1.07 (t, 6H) | -CH₂CH₂C**H₃** |
| 1.74 (m, 4H) | 1.65 (m, 4H) | -CH₂C**H₂**CH₃ |
| 2.98 (m, 4H) | 2.84 (m, 4H) | -C**H₂**CH₂CH₃ |
| 5.73 (s, 2H) | 5.81 (s, 2H) | **H²** ring |
| 7.07, 7.32 (dd,1H) | 7.19, 7.47 (dd,2H) | **H⁵,H⁶** ring |
| 7.57, 7.65 (d,1H) | 7.57, 7.65 (d,2H) | **H⁴,H⁷** ring |

### EXAMPLE 4

### Preparation of rac/meso isomers of [Zr{Me₂Si(3-nBu-(η⁵⁻C₉H₅))₂}Cl₂] (14)

Synthesis of compound (14) was carried out in a similar manner as that of compound (11) using as reagents: [Me₂Si(3-R-C₉H₆)₂] (R=CH₂CH₂CH₂CH₃) (5.00 g, 12.48 mmol), n-BuLi (1.60 M in hexane) (18.72 ml, 29.95 mmol) and ZrCl₄ (2.91 g, 12.48 mmol). The desired compound **(14)** was obtained as an orange solid (35% yield) as a mixture of rac/meso 58:42 isomers and identified by ¹H NMR analysis.

| δ(ppm) Meso isomer | δ(ppm) Rac isomer | **H** |
|---|---|---|
| 0.87 (s, 3H) | | Si(C**H**₃) (exo) |
| 0.89 (t, 6H) | 0.90 (t, 6H) | -CH₂CH₂CH₂C**H₃** |
| | 1.11 (s, 6H) | Si(C**H₃**)₂ |
| 1.36 (s, 3H) | | Si(C**H₃**) (endo) |
| 1.34 (m, 4H) | 1.34 (m, 4H) | -CH₂CH₂C**H₂**CH₃ |
| 1.51 (m, 4H) | 1.51 (m, 4H) | -CH₂C**H₂**CH₂CH₃ |
| 2.72 (m, 4H) | 2.82 (m, 4H) | -C**H₂**CH₂CH₂CH₃ |
| 5.58 (s, 2H) | 5.77 (s, 2H) | **H²** ring |
| 6.91, 7.16 (dd,1H) | 7.06, 7.32 (dd,1H) | **H**⁵,**H**⁶ ring |
| 7.41, 7.49 (d,1H) | 7.41, 7.49 (d,1H) | **H**⁴,**H**⁷ ring |

### EXAMPLE 5

### Preparation of rac/meso isomers of [Zr{Me₂Si(3-CH₂C₆H₅₋(η⁵-C₉H₅))₂}Cl₂] (15)

Synthesis of compound (15) was carried out in a similar manner as that of compound (11) using as reagents: [Me₂Si(3-R-C₉H₆)₂] (R= CH₂Ph) (5.00 g, 10.67 mmol), n-BuLi (1.60 M in hexane) (16.00 ml, 25.61 mmol) and ZrCl₄ (2.49 g, 10.67 mmol) . The desired compound (15) was obtained as an orange solid (40% yield) as a mixture of rac/meso isomers and identified by ¹H NMR analysis.

| δ(ppm) Meso isomer | δ(ppm) Rac isomer | **H** |
|---|---|---|
| | 0.79 (s, 6H) | Si(C**H₃**)₂ |
| 1.01 (s, 3H) | | Si(C**H₃**) (exo) |
| 1.29 (s, 3H) | | Si(C**H₃**) (endo) |
| 4.28 (dd, 4H) | 4.12 (dd, 4H) | -C**H₂**C₆H₅ |
| 5.77 (s, 2H) | 5.59 (s, 2H) | **H²** |
| 7.02-7.48 (m, 10H) | 7.02-7.48 (m, 10H) | -CH₂C₆**H₅** |
| 7.02-7.48 (m, 8H) | 7.02-7.48 (m, 8H) | **H⁴ to H⁷** ring |

### EXAMPLE 6

### Preparation of rac/meso isomers of [Zr{Me₂Si(3-CH₃CH₂CH₂-(η⁵-C₉H₅) (η⁵-C₉H₆)Cl₂] (16)

Synthesis of compound **(16)** was carried out in a similar manner as that of compound **(11)** using as reagents: [Me₂Si(3-R-C₉H₅) (C₉H₆)] (R = CH₂CH₂CH₃) (5.04 g, 15.25 mmol), n-BuLi (1.60 M in hexane) (22.88 ml, 36.60 mmol) and ZrCl₄ (3.55 g, 15.25 mmol). The desired compound **(16)** was obtained as an orange solid (40% yield), shown to be a mixture of rac/meso isomers and was identified by ¹H NMR analysis.

The separation of the two isomers was achieved by repeated fractional recrystallization from cold toluene (-30 °C) .

Three samples were isolated as rac (99:1 rac/meso), meso (1:99) and mixture of rac/meso 38:62.

| δ(ppm) Meso isomer | δ(ppm) Rac isomer | **H** |
|---|---|---|
| 0.94 (s, 3H), 1.38 (s, 3H) | 1.12 (s, 3H), 1.14 (s, 3H) | Si(C**H₃**)₂ |
| 0.95 (t, 3H) | 0.89 (t, 3H) | -CH₂CH₂C**H₃** |
| 1.63 (m, 2H) | 1.51 (m, 2H) | -CH₂C**H₂**CH₃ |
| 2.82 (m, 2H) | 2.69 (m, 2H) | -CH₂CH₂CH₃ |
| 5.71 (s, 1H) | 5.76 (s, 1H) | **H²** ring |
| 5.98 (m, 1H) | 6.12 (m, 1H) | **H^{2'}** ring |
| 7.05 (m, 1H) | 6.92 (m, 1H) | **H^{3'}** ring |
| 6.94 (m, 2H), 7.21 (m, 2H), | 7.08 (m, 2H), 7.35 (m, 2H), | **H⁴** to **H⁷, H⁴'** to **H^{7'}** ring |
| 7.43 (m, 1H), 7.50 (m, 1H), | 7.46 (m, 2H), 7.49 (m, 1H), | |
| 7.57 (m, 2H) | 7.62 (m, 1H) | |

### EXAMPLE 7

### Preparation of rac/meso isomers of [Zr{Me₂Si(3-CH₃CH₂₋(η⁵-C₉H₅))(η⁵-C₉H₆)}Cl₂] (17)

Synthesis of compound **(17)** was carried out in a similar manner as that of compound **(11)** using as reagents: [Me₂Si (3-R-C₉H₅) (C₉H₆)] (R = CH₂CH₃) (4.83 g, 15.25 mmol), n-BuLi (1.60 M in hexane) (22.88 ml, 36.60 mmol) and ZrCl₄ (3.55 g, 15.25 mmol). The desired compound **(17)** was obtained as an orange solid (30% yield) shown to be a mixture of rac/meso isomers and identified by ¹H NMR analysis.

The separation of the two isomers was achieved by repeated fractional recrystallization from cold toluene (-30 °C).

Three samples were isolated as rac (98:2 rac/meso), meso (2:98 rac/meso) and mixture of isomers rac/meso 55:45.
¹HRMN:

| δ(ppm) Meso isomer | δ(ppm) Rac isomer | **H** |
|---|---|---|
| 0.94 (s, 3H), 1.36 (s, 3H) | 1.14 (s, 6H) | Si(C**H**₃)₂ |
| 1.22 (t, 3H) | 1.12 (t, 3H) | -CH₂C**H**₃ |
| 2.86 (c, 2H) | 2.77 (m, 2H) | -C**H**₂CH₃ |
| 5.72 (s, 1H) | 5.81 (s, 1H) | **H**² ring |
| 5.97 (m, 1H) | 6.13 (m, 1H) | **H**^{2'} ring |
| 7.04 (m, 1H) | 6.92 (m, 1H) | **H^{3'} ring** |
| 6.93 (m, 2H), 7.20 (m, 2H), | 7.09 (m, 2H), 7.35 (m, 2H), | **H**⁴to **H**⁷, **H**^{4'} to **H**^{7'} ring |
| 7.93 (m, 2H), 7.48 (m, 1H), | 7.49 (m, 2H) 7.50 (m, 1H), | |
| 7.56 (m, 1H) | 7.62 (m, 2H) | |

### EXAMPLE 8

### Preparation of rac/meso isomers of [Zr{Me₂Si(3-R'-(η⁵⁻C₉H₅))(3'-R"(η⁵-C₉H₅))}Cl₂] R' = CH₂CH₂CH₃, R" = CH₂CH₃ (18)

Synthesis of compound **(18)** was carried out in a similar manner as that of compound of formula **(11)** using as reagents: [Me₂Si(3-R'-C₉H₅) (3-R''C₉H₅)] (R'= CH₂CH₂CH₃; R''=CH₂CH₃) (5.48 g, 15.25 mmol), n-BuLi (1.60 M in hexane) (22.88 ml, 36.60 mmol) and ZrCl₄ (3.55 g, 15.25 mmol).

The desired compound was obtained as an orange solid (32% yield), shown to be a mixture of rac/meso isomers and identified by ¹H NMR analysis.

The separation of the two isomers was achieved by repeated fractional recrystallization from cold toluene (-30 °C).

One sample was isolated as (91:9 rac/meso) mixture.

¹H NMR(CDCl₃) rac isomer: δ(ppm) 1.10 (s,3H,**Me**Si), 1.12 (s,3H,**Me**Si), 1.21, 1. 11 (t,3H,3H,C**H**₃-CH₂- Et and Pro chain), 1.60 (m,2H,CH₃**CH₂**CH₂), 2.78 (m,2H,2H,C**H**₂ Et and Pro chain), 5.70 (s,1H,**H**² one indene ring), 5.73 (s,1H,**H²** other indene ring), 7.08, 7.31 (dd,2H,2H **H⁵** and **H⁶**), 7.45, 7.51 (d,2H,2H **H⁴** and **H⁷** indene ring) .

### EXAMPLE 9

### Preparation of rac/meso isomers of [Zr{(3-R-(η⁵-C₉H₅))-CH₂CH₂-(3-R-η⁵-C₉H₅))}Cl₂] R = CH₂CH₃ (19)

Over an stirred solution of 3.14 g of [(3-R-C₉H₆)-CH₂-CH₂-(3-R-C₉H₆)] (R = CH₂CH₃) **(6)** in an Et₂O/THF mixture (20 ml/5 ml) maintained at 0°C, 8.8 ml, n-BuLi solution (2.5 M in hexane) is added over a 20 minute period. Temperature was allowed to raise after addition was finished and stirring was continued for 2 more hours. All the solvents were stripped off under vacuo and the resulting solid re-slurried in 30 ml toluene and finally cooled at -78°C. ZrCl₄ (1.3 g) was added and the final suspension stirred for 15 hours.

The resulting reaction mixture was filtered over Celite, toluene was stripped off under reduced pressure and the solid obtained re-slurried in hexane and filtered. The yellow-orange solid was purified by extraction with a mixture of toluene/hexane, filtered and crystallized at -20°C.

The desired compound **(19)** was obtained in a 32% yield as a racemic/meso mixture of isomers 51:49.

¹H NMR(mixture of isomers): δ (ppm) 1.11, 1.21 (rac,meso,t,6H;**CH₃**); 2.78, 2.95 (q,4H,rac/meso **CH₂**-CH₃); 3.60, 4.00 (m,4H,meso **CH₂-CH₂-** bridge); 3.65, 3.78 (m,4H,rac **CH₂-CH₂-** bridge); 6.00 (s, 1H, rac ring H₂ ); 6.16 (s,1H,meso ring **H²** ); 7.29 (m,1H); 7.36 (m,1H); 7.38 (m,1H); 7.42 (m,1H); 7.53 (m,1H); 7.55 (m,1H); 7.61 (m,1H); 7.63 (m,1H) (rac and meso ring protons **H⁴ to H⁷, H^{4'} to H^{7'})**

### EXAMPLE 10

### Preparation of rac/meso isomers of [Zr{(3-R-(η⁵-C₉H₅))-CH₂CH₂- (3-R-η⁵-C₉H₅)}Cl₂] R=CH₂CH₂CH₂CH₃ (20)

Compound (20) was synthesized in a similar manner as that described above for the ethyl derivative (Example 9).It was also isolated as a racemic/meso mixture of isomers in 35% yield as a rac/meso mixture of isomers 52:48 rac:meso.

¹H NMR (mixture of isomers): δ(ppm) 0.87, 0.92 (t,6H;CH₃); 1.28-1.60(mixture of multiplets,8H,CH₂-**CH₂₋CH₂**-CH₃); 2.62, 2.95 (m,4H,meso **CH₂**-CH₂-CH₂-CH₃); 2.8-2.9 (m, 4H, rac **CH₂**-CH₂-CH₂-CH₃); 3.60, 4.03 (m,4H,meso **CH₂₋CH₂**- bridge); 3.70- 3.80 (m,4H,rac **CH₂-CH₂-** bridge); 5.99 (s,1H,rac ring **H**²); 6.15 (s,1H,meso ring **H²**); 7.29 (m,1H); 7.36 (m,1H); 7.38 (m,1H); 7.42 (m,1H); 7.53 (m,1H); 7.55 (m,1H); 7.61 (m,1H); 7.63 (m, 1H) (rac and meso ring protons **H⁴ to H⁷, H^{4'} to H^{7'}**).

### Ç

### III. Preparation of supported catalyst with pure metallocene rac or meso isomers

### EXAMPLE 11

### Preparation of supported meso dimethylsilanediylbis(1-indenyl-3-methyl) zirconium dichloride

All operations were performed under inert conditions using standard Schlenk techniques or dry box under nitrogen. To 3.5 ml of 30% MAO (methylalumoxane available from Albemarle) a 10 ml toluene solution of 37 mg of meso-[Zr{Me₂Si(3-CH₃-(η⁵-C₉H₅))₂}Cl₂] synthesized in Example 1 as a 5:95 rac:meso mixture was added and the mixture was stirred for 20 minutes. A light red solution is formed.

The metallocene-MAO solution was added to 2 g of Davison 2908 silica dried at 400°C contained in a flask provided with a mechanical agitator. The resulting slurry was stirred for 2 hours more at room temperature. Toluene was eliminated under vacuo and the solid dried for 16 hours at room temperature to give 2.8 g of a pink-salmon free flowing solid.

### EXAMPLE 12

### Preparation of supported rac dimethylsilanediyl(1-indenyl)(1-indenyl-3-ethyl) zirconium dichloride

Rac dimethylsilanediyl(indenyl)(1-indenyl-3-ethyl) zirconium dichloride was supported in a manner similar to that used in Example 11 but using 37 mg of [Zr{Me₂Si(3-CH₃CH₂-(η⁵-C₉H₅))(η⁵-C₉H₆)}Cl₂] synthesized in Example 7 in a 98:2 (rac:meso) molar proportion.

### EXAMPLE 13

### Preparation of supported meso dimethylsilanediyl(1-indenyl)(1-indenyl-3-ethyl) zirconium dichloride

meso dimethylsilanediyl(indenyl)(1-indenyl-3-ethyl) zirconium dichloride was supported in a manner similar to that used in Example 11 but using 37 mg of [Zr{Me₂Si(3-CH₃CH₂-(η⁵-C₉H₅))(η⁵-C₉H₆)}Cl₂] synthesized in Example 7 in a 2:98 (rac:meso) molar proportion.

### EXAMPLE 14

### Preparation of supported meso dimethylsilanediyl(1-indenyl)(1-indenyl-3-propyl) zirconium dichloride

meso dimethylsilanediyl(1-indenyl)(1-indenyl-3-ethyl) zirconium dichloride was supported in a manner similar to that used in Example 11 but using 38 mg of [Zr{Me₂Si(3-CH₃CH₂CH₂)-(η⁵-C₉H₅)(η⁵-C₉H₆)}Cl₂] synthesized in Example 6 in a 1:99 (rac:meso) molar proportion.

### EXAMPLE 15

### Preparation of supported rac dimethylsilanediyl(1-indenyl)(1-indenyl-3-propyl) zirconium dichloride

rac dimethylsilanediyl(1-indenyl)(1-indenyl-3-propyl) zirconium dichloride was supported in a manner similar to that used in Example 11 but using 38 mg of [Zr{Me₂Si (3-CH₃CH₂CH₂- (η⁵-C₉H₅)) (η⁵-C₉H₆)}Cl₂] synthesized in Example 6 in a 99:1 (rac:meso) molar proportion.

### EXAMPLE 16

### Preparation of supported rac dimethylsilanediyl (1-indenyl-3-ethyl)(1-indenyl-3-propyl) zirconium dichloride

rac dimethylsilanediyl(1-indenyl-3-ethyl)(1-indenyl-3-propyl) zirconium dichloride was supported in a manner similar to that used in Example 11 but using 40 mg of [Zr{Me₂Si (3-CH₃CH₂-(η⁵-C₉H₅)) (3-CH₃CH₂-CH₂-(η⁵⁻C₉H₆))}Cl₂] synthesized in Example 8 in a 91:9 (rac:meso) molar proportion.

### IV. Polymerization with supported catalysts from metallocenes as racemic or meso isomers

### EXAMPLE 17

### Polymerization using supported meso dimethylsilylanediylbis(1-indenyl-3-methyl) zirconium dichloride

Copolymerization of ethylene and 1-hexene was carried out in a Büchi glass pressure reactor of 1.3 liters equipped with a mechanical agitator under anhydrous conditions. Reactor was charged with 600 ml of dry heptane, 10 ml of hexene, 4 ml of a TIBA 1M solution, equilibrated at the desired temperature (85°C) and finally pressurized with ethylene (3.5 bar).

80 mg of supported meso dimethylsilanediylbis(1-indenyl-3-methyl) zirconium dichloride as prepared in Example 11 contained in a pressure tube was injected as a slurry in heptane by flushing with ethylene until the final desired pressure (4 bar) was reached.

Polymerization reaction was maintained at constant pressure (4 bar) and with temperature regulation at 85°C for 30 minutes. At the end of polymerization time, reactor was cooled and depressurized and the polymer was recovered by pouring the reactor content over acidified methanol and filtering.

The polymer was then dried for at least 20 hour in a vacuum oven at 40°C. Activity as g PE/g of supported catalyst per hour is given.

Activity: 360 g PE/g catalyst x hour.

Main polymer properties and type of molecular weight distribution is given in Table 1.

### EXAMPLES 18-22

Polymerization was performed in the same manner as that described in Example 17 but using the following supported metallocenes:
Example 18: Supported rac dimethylsilanediylbis(1-indenyl)(1-indenyl-3-ethyl) zirconium dichloride as prepared in Example 12. Activity 740 g PE/g catalyst per hour.
Example 19: Supported meso dimethylsilanediylbis(1-indenyl)(1-indenyl-3-ethyl) zirconium dichloride as prepared in Example 13. Activity 190 g PE/g catalyst per hour.
Example 20: Supported meso dimethylsilanediylbis(1-indenyl)(1-indenyl-3-propyl) zirconium dichloride as prepared in Example 14. Activity 350 g PE/g catalyst per hour.
Example 21: Supported rac dimethylsilanediylbis(1-indenyl)(1-indenyl-3-propyl) zirconium dichloride as prepared in Example 15. Activity 1,100 g PE/g catalyst per hour.
Example 22: Supported rac dimethylsilanediyl(1-indenyl-3-ethyl)(1-indenyl-3-propyl) zirconium dichloride as prepared in Example 16. Activity 598 g PE/g catalyst per hour.

**Table I**

| **METALLOCENE** | | | | | **COPOLYMER** | | | | |
|---|---|---|---|---|---|---|---|---|---|
| **Q** | **R1** | **R2** | **Example** | **Rac:Meso** | **MI** | **FI** | **Mw** | **Mw/Mn** | **GPC type** **(a)** |
| **Si** | Me | Me | 17 | 5:95 | 1.70 | 19.1 | 86540 | 3.24 | Narrow: I |
| **Si** | H | Et | 19 | 2:98 | 0 | 3.27 | - | - | |
| **Si** | H | Pr | 20 | 1:99 | 11.6 | - | 63100 | 1.87 | Narrow: I |
| **Si** | H | Et | 18 | 98:2 | 0 | 0.95 | - | - | |
| **Si** | H | Pr | 21 | 99:1 | 7.5 | - | 70300 | 2.86 | Narrow: I |
| **Si** | Et | Pr | 22 | 91:9 | 1.4 | 17.8 | - | - | - |

| | | | | | | | | | |
|---|---|---|---|---|---|---|---|---|---|
| (a) See GPC types (Figures 2, 3, 4, and 5). The figures show typical representative GPC traces found for the polymers obtained with the types of metallocenes of the present invention tested along the span of the work and are not necessarily associated with the specific example shown in the Table being here incorporated for illustrative purposes. | | | | | | | | | |

As Table I shows, molecular weight of the PE copolymers obtained with structurally similar metallocenes [Examples 18-21-22 (rac isomers) and 17-19-20 (meso isomers)] are high when ethyl is the 3-substituent (low MI) and unexpectedly significantly lower when propyl is the substituent as MI values confirm. The same tendency will be apparent when analyzing additional results from examples below when using isomeric mixtures (Table II): when substituent is Me or Et, PE molecular weight obtained is high. For larger than ethyl substituent (propyl or butyl) molecular weight of PE obtained is significantly lower.

Interestingly and useful enough, and this is one of the teaching of the present invention, is that a wide range of molecular weight (co)polymers can be made with the metallocenes of the invention without the need to use molecular weight regulators by judicious selection of the substituent and type of substitution.

As a way of illustration: In Example 18 (ethyl substituent) Mw of the obtained copolymer is high (MI=0), for Pr (Example 21) MI is significantly higher with a 7.5 value while for the "mixed" Et-Pr (Example 22) an intermediate value of 1.4 is obtained.

Molecular weight distribution of PE copolymers obtained with the metallocenes used as racemic or meso pure isomers is narrow being of the type I shown in Figure 2.

Meso isomer metallocenes of this invention produce polymers with lower molecular weight than their corresponding rac isomers counterparts. The differences between molecular weight of the produced polymers with meso versus rac metallocene isomers depends on the type of metallocene structure being larger when disubstituted metallocenes are used than when monosubstituted metallocenes are used instead as will be shown below.

All these findings allow the preparation of very different molecular weight and molecular weight distribution ethylene polymers by proper combination of different variables associated with metallocene structure: isomer type content (rac or meso substantially pure isomer or mixtures of both ); substituent size ("short": Me, Et or "large": propyl and larger for example); substitution type: mono or disubstitution, being one of the object of the present invention and will be more fully illustrated below.

### V. Preparation of supported catalyst with metallocenes used as mixtures of rac and meso isomers

### EXAMPLES 23-33

Supported catalyst of Examples 23-33 were prepared in a similar manner as that of Example 11 but using instead:
Example 23: 38 mg of dimethylsilanediylbis(1-indenyl-3-methyl) zirconium dichloride as prepared in Example 1 and isolated as a 53:47 rac:meso molar proportion.
Example 24: 38 mg of dimethylsilanediylbis(1-indenyl-3-methyl) zirconium dichloride as prepared in Example 1 and isolated as a 20:80 rac:meso molar proportion.
Example 25: 38 mg of dimethylsilanediylbis(1-indenyl-3-methyl) zirconium dichloride as prepared in Example 1 and isolated as a 13:87 rac:meso molar proportion.
Example 26: 37 mg of dimethylsilanediylbis(1-indenyl-3-ethyl) zirconium dichloride as prepared in Example 2 and isolated as a 9:91 rac:meso molar proportion.
Example 27: 37 mg of dimethylsilanediylbis(1-indenyl-3-ethyl) zirconium dichloride as prepared in Example 2 and isolated as a 50:50 rac:meso molar proportion.
Example 28: 41 mg of dimethylsilanediylbis(1-indenyl-3-propyl) zirconium dichloride as prepared in Example 3 and isolated as a 59:41 rac:meso molar proportion.
Example 29: 44 mg of dimethylsilanediylbis(1-indenyl-3-butyl) zirconium dichloride as prepared in Example 4 and isolated as a 58:42 rac:meso molar proportion.
Example 30: 37 mg of dimethylsilanediyl(1-indenyl)(1-indenyl-3-ethyl) zirconium dichloride as prepared in Example 7 and isolated as a 55:45 rac:meso molar proportion.
Example 31: 38 mg of dimethylsilanediyl(1-indenyl)(1-indenyl-3-propyl) zirconium dichloride as prepared in Example 6 and isolated as a 55:45 rac:meso molar proportion.
Example 32: 36 mg of 1,2-ethanediylbis(1-indenyl-3-ethyl) zirconium dichloride as prepared in Example 9 and isolated as a 51:49 rac:meso molar proportion.
Example 33: 41 mg of 1,2-ethanediylbis(1-indenyl-3-butyl) zirconium dichloride as prepared in Example 10 and isolated as a 50:50 rac:meso molar proportion.
Comparative Example A: 35 mg of dimethylsilanediylbis(1-indenyl) zirconium dichloride as 99:1 rac:meso molar proportion.

### VI. Polymerization with supported catalysts made with metallocenes as mixture of racemic or meso isomers

### EXAMPLES 34-40

Polymerization was performed in the same manner as that described in Example 17 but using instead the supported metallocenes mentioned in each case. Found activity is given.
Example 34: Supported dimethylsilanediylbis(1-indenyl-3-methyl) zirconium dichloride as prepared in Example 23. Activity 209 g PE/g catalyst per hour.
Example 35: Supported dimethylsilanediylbis(1-indenyl-3-methyl) zirconium dichloride as prepared in Example 24. Activity 288 g PE/g catalyst per hour.
Example 36: Supported dimethylsilanediylbis(1-indenyl-3-methyl) zirconium dichloride as prepared in Example 25. Activity 320 g PE/g catalyst per hour.
Example 37: Supported dimethylsilanediylbis(1-indenyl-3-ethyl) zirconium dichloride as prepared in Example 26. Activity 465 g PE/g catalyst per hour.
Example 38: Supported dimethylsilanediylbis(1-indenyl-3-ethyl) zirconium dichloride as prepared in Example 27. Activity 309 g PE/g catalyst per hour.
Example 39: Supported dimethylsilanediylbis(1-indenyl-3-propyl) zirconium dichloride as prepared in Example 28. Activity 655 g PE/g catalyst per hour.
Example 40: Supported dimethylsilanediylbis(1-indenyl-3-butyl) zirconium dichloride as prepared in Example 29. Activity 498 g PE/g catalyst per hour.
Example 41: Supported dimethylsilanediyl(1-indenyl)(1-indenyl-3-ethyl) zirconium dichloride as prepared in Example 30. Activity 734 g PE/g catalyst per hour.
Example 42: Supported dimethylsilanediyl(1-indenyl)(1-indenyl-3-propyl) zirconium dichloride as prepared in Example 31. Activity 629 g PE/g catalyst per hour.
Example 43: Supported 1,2-ethanediylbis(1-indenyl-3-ethyl) zirconium dichloride as prepared in Example 32. Activity 201 g PE/g catalyst per hour.
Example 44: Supported 1,2-ethanediylbis(1-indenyl-3-butyl) zirconium dichloride as prepared in Example 33. Activity 204 g PE/g catalyst per hour.
Comparative Example B: Supported dimethylsilanediylbis(1-indenyl) zirconium dichloride as prepared in Comparative Example A. Activity 405 g PE/g catalyst per hour.

Polymer properties obtained with above supported metallocenes are shown in Table II. Results show that optionally substituted metallocenes of the invention present higher activities than non substituted comparative example. The molecular weight of the polymers obtained with metallocenes having Me or Et substituents at position 3 of the indenyl ring is higher than the obtained with the non substituted comparative example and much higher than the obtained with metallocenes containing groups longer than ethyl as substituents.

Additionally, different molecular weight distribution polymers can be obtained by proper combination of metallocene type substituent,metallocene type (mono,bis substituted,symmetrical and non symmetrical) and type of isomer being used as substantially pure stereoisomer or in mixtures.

**Table II**

| **METALLOCENE** | | | | | **POLYMER PROPERTIES** | | | | |
|---|---|---|---|---|---|---|---|---|---|
| **Q** | **R¹** | **R²** | **Ex. No.** | **Rac:Mes** | **MI** | **FI** | **Mw** | **Mw/Mn** | **GPC type (a)** |
| Si | Me | Me | 34 | 53:97 | 0 | 1 | | | Broad bimodal: Type III |
| Si | Me | Me | 35 | 20:80 | 0 | 4.4 | 279000 | 14.31 | Broad bimodal: Type III |
| Si | Me | Me | 36 | 13:87 | 0.29 | 64 | 213000 | 17.2 | Broad bimodal: Type III |
| Si | Et | Et | 37 | 9:91 | 0 | 13.4 | 248000 | 21.7 | Broad bimodal: Type III |
| Si | Et | Et | 38 | 50:50 | 0 | 1 | | - | - |
| Si | Pr | Pr | 39 | 59:41 | 5.8 | - | 81300 | 3.35 | Broad: Type II |
| Si | Bu | Bu | 40 | 58:42 | 7.83 | - | 51080 | 4.6 | Broad: Type II |
| Si | H | Et | 41 | 55:45 | 0.96 | - | - | - | - |
| Si | H | Pr | 42 | 40:60 | 17.22 | - | 50900 | 3.69 | Narrow bimodal: Type IV |
| Et | Et | Et | 43 | 51:49 | 0 | 3.3 | - | - | - |
| Et | Bu | Bu | 44 | 50:50 | 5 | 121 | - | - | - |
| Si | H | H | Comp.B | 99:1 | 0.92 | 18,3 | - | - | - |

| | | | | | | | | | |
|---|---|---|---|---|---|---|---|---|---|
| (a) See GPC types (Figures 1-4). The figures show typical representative GPC traces found for the polymers obtained with the types of metallocenes of the present invention tested along the span of the work and are not necessarily associated with the specific example shown in the Table being here incorporated for illustrative purposes. | | | | | | | | | |

While the present invention has been described and illustrated making reference to particular embodiments, specially by the provided examples, those of ordinary skill in the art will appreciate that the invention itself will lead to variation and combination of the various teachings and results not necessarily illustrated herein. Reference should be made solely to the appended claims to determine the scope of the invention.

## Claims

1. A bridged metallocene compound containing two indenyl ligands, wherein at least one of them is substituted at position 3, joined by a bridging group and complexed to a metal atom of formula (1): 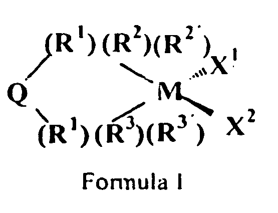 wherein:
M is Ti, Zr or Hf;
R¹ is an indenyl ligand, wherein the benzene ring of R¹ is optionally substituted with one to four substituents which are the same or different selected from a C₁-C₂₀ alkyl and a C₆-C₂₀ aryl;
Q is a divalent group of formula =SiR⁴R⁵ or -CH R⁴-CH R⁵-; wherein R⁴ and R⁵ are, independently, hydrogen atoms or monovalent radicals selected from, halogen, C₁ -C₂₀ alkyl , C₆-C₂₀ alkyl; C₂-C₂₀ alkenyl; C₇-C₂₀ arylalkyl and C₇-C₂₀ alkylaryl, optionally containing oxygen and/or silicon atoms as substituents;
R² and R³ bonded to R¹ at position 3 are, independently, hydrogen or a radical Rₐ, wherein Rₐ is a monovalent organic radical selected from C₁ -C₂₀ alkyl, C₂ -C₂₀ alkenyl and C₇ -C₂₀ alkylaryl, said monovalent organic radical optionally containing oxygen and/or silicon atoms as substituents which are not bonded directly to the cyclopentadienyl ring moiety;
R^{2'} and R^{3'} bonded to R¹ at position 2 are, independently, hydrogen or a radical Rₐ, wherein Rₐ is as defined above;
wherein at least one of R² and R³ is Rₐ, and
when R² is Rₐ, then R^{2'} is H, or
when R³ is Rₐ, then R^{3'} is H, and
when R² and R³ independently are both Rₐ, then R^{2'} and R^{3'} are simultaneously H, with the proviso that
when R^{2'} and R^{3'} are simultaneously hydrogen, then R² and R³ are not simultaneously methyl (Me), iso-propyl (i-Pr) or tert-butyl (t-Bu) for rac isomer; or
when R^{2'} and R^{3'} are simultaneously hydrogen, M is Zr or Hf, X¹ and X² are both Cl and Q is =SiMe₂, then R² and R³ are not simultaneously pentenyl for rac and meso isomers;
or when R^{2'} and R^{3'} are simultaneously hydrogen, M is Zr, X¹ and X² are both Cl and Q is =SiMe₂, then R² and R³ are not simultaneously para-tolyl for rac and meso isomers;
or when R² is H then R³ is not Me, or when R² is Me then R³ is not H for rac and meso isomers;
or when R², R^{2'}, R^{3'} are H, M is Zr, X¹ and X² are both Cl and Q is =SiMe₂, then R³ is not benzyl, or when R² is benzyl, R^{2'} and R^{3'} are both H, M is Zr, X¹ and X² are both Cl and Q is =SiMe₂, then R³ is not H for rac and meso isomers; and
X¹ and X² are, independently, monovalent ligands selected from hydrogen, halogen, C₁-C₂₀ alkyl , C₆-C₂₀ aryl, C₇-C₂₀ alkylaryl, C₇-C₂₀ arylalkyl, C₁-C₂₀ hydrocarbyloxy, C₆-C₂₀ aryloxy, C₁-C₂₀ di(alkyl)amido and carboxylate;
its racemic or meso stereoisomers and mixtures thereof.

2. A bridged metallocene compound according to claim 1
wherein:
R^{2,} and R^{3,} bonded to R¹ at position 2 are both hydrogen;
R² and R³ bonded to R¹ at position 3 are, independently, selected from ethyl, propyl, butyl, pentyl and hexyl; and
X¹ and X² are the same or different monovalent ligands selected from the halogens.

3. Metallocene compound according to any of claims 1 or 2, wherein the bridged metallocene is a rac stereoisomer.

4. Metallocene compound according to any of claims 1 or 2, wherein the bridged metallocene is a mixture of rac and meso stereoisomers.

5. Metallocene compound according to claim 1, selected from the group consisting of:
Meso dimethylsilanediylbis(1-indenyl-3-methyl) zirconium dichloride
Rac and meso dimethylsilanediylbis (1-indenyl-3-pentyl) zirconium dichloride
Rac and meso dimethylsilanediylbis (1-indenyl-3-hexyl) zirconium dichloride
Rac and meso 1,2 ethanediylbis (1-indenyl-3-pentyl) zirconium dichloride
Rac and meso 1,2 ethanediylbis (1-indenyl-3-hexyl) zirconium dichloride
Rac and meso (dimethylsilanediyl (1-indenyl)(1-indenyl-3-pentyl) zirconium dichloride
Rac and meso dimethylsilanediyl (1-indenyl)(1-indenyl-3-hexyl) zirconium dichloride
Rac and meso 1,2 ethanediyl (1-indenyl)(1-indenyl-3-pentyl) zirconium dichloride
Rac and meso 1,2 ethanediyl (1-indenyl)(1-indenyl-3-hexyl) zirconium dichloride
Rac and meso phenylmethylsilanediyl (1-indenyl)(1-indenyl-3-butyl) zirconium dichloride
Rac and meso phenylmethylsilanediyl (1-indenyl)(1-indenyl-3-pentyl) zirconium dichloride
Rac and meso phenylmethylsilanediyl (1-indenyl)(1-indenyl-3-hexyl) zirconium dichloride
Rac and meso dimethylsilanediyl (1-indenyl-3-methyl)(1-indenyl-3-ethyl) zirconium dichloride
Rac and meso dimethylsilanediyl (1-indenyl-3-methyl)(1-indenyl-3-propyl) zirconium dichloride
Rac and meso dimethylsilanediyl (1-indenyl-3-methyl)(1-indenyl-3-butyl) zirconium dichloride
Rac and meso dimethylsilanediyl (1-indenyl-3-methyl)(1-indenyl-3-pentyl) zirconium dichloride
Rac and meso dimethylsilanediyl (1-indenyl-3-methyl)(1-indenyl-3-hexyl) zirconium dichloride
Rac and meso dimethylsilanediyl (1-indenyl-3-ethyl)(1-indenyl-3-propyl) zirconium dichloride
Rac and meso dimethylsilanediyl (1-indenyl-3-ethyl)(1-indenyl-3-butyl) zirconium dichloride
Rac and meso dimethylsilanediyl (1-indenyl-3-ethyl)(1-indenyl-3-pentyl) zirconium dichloride
Rac and meso dimethylsilanediyl (1-indenyl-3-ethyl)(1-indenyl-3-hexyl) zirconium dichloride
Rac and meso 1,2 ethanediyl (1-indenyl-3-methyl)(1-indenyl-3-ethyl) zirconium dichloride
Rac and meso 1,2 ethanediyl (1-indenyl-3-methyl)(1-indenyl-3-propyl)zirconium dichloride
Rac and meso 1,2 ethanediyl (1-indenyl-3-methyl)(1-indenyl-3-butyl) zirconium dichloride
Rac and meso 1,2 ethanediyl (1-indenyl-3-methyl)(1-indenyl-3-pentyl) zirconium dichloride
Rac and meso 1,2 ethanediyl (1-indenyl-3-methyl)(1-indenyl-3-hexyl) zirconium dichloride
Rac and meso 1,2 ethanediyl (1-indenyl-3-ethyl)(1-indenyl-3-propyl) zirconium dichloride
Rac and meso ethylenebis (1-indenyl-3-ethyl)(1-indenyl-3-butyl) zirconium dichloride
Rac and meso ethylenebis (1-indenyl-3-ethyl)(1-indenyl-3-pentyl) zirconium dichloride
Rac and meso ethylenebis (1-indenyl-3-ethyl)(1-indenyl-3-hexyl) zirconium dichloride
Rac and meso dimethylsilanediyl (1-indenyl-3-methyl)(1-indenyl-3-ethyl-4,7-dimethyl) zirconium dichloride
Rac and meso dimethylsilanediyl (1-indenyl, 3-methyl)(1-indenyl-3-propyl, 4,7-dimethyl) zirconium dichloride
Rac and meso dimethylsilanediyl (1-indenyl-3-methyl)(1-indenyl-3-butyl-4,7-dimethyl) zirconium dichloride
Rac and meso dimethylsilanediyl (1-indenyl-3-methyl)(1-indenyl-3-ethyl-4-phenyl) zirconium dichloride
Rac and meso dimethylsilanediyl (1-indenyl-3-methyl)(1-indenyl-3-propyl-4-phenyl) zirconium dichloride
Rac and meso dimethylsilanediyl (1-indenyl-3-methyl)(1-indenyl-3-butyl-4-phenyl) zirconium dichloride
Rac and meso dimethylsilanediyl (1-indenyl-3-ethyl)(1-indenyl-3-propyl-4-phenyl) zirconium dichloride
Rac and meso dimethylsilanediyl (1-indenyl-3-ethyl)(1-indenyl-3-butyl-4-phenyl) zirconium dichloride
Rac and meso dimethylsilanediyl (1-indenyl-3-ethyl)(1-indenyl-3-propyl-4,7-dimethyl) zirconium dichloride
Rac and meso dimethylsilanediyl (1-indenyl-3-ethyl)(1-indenyl-3-butyl-4,7-dimethyl) zirconium bichloride
Rac and meso dimethylsilanediyl (1-indenyl-2-methyl)(1-indenyl-3-methyl) zirconium dichloride
Rac and meso dimethylsilanediyl (1-indenyl-2-methyl)(1-indenyl-3-ethyl) zirconium dichloride
Rac and meso dimethylsilanediyl (1-indenyl-3-methyl)(1-indenyl-3-propyl) zirconium dichloride.
Rac and meso dimethylsilanediyl (1-indenyl-2-ethyl)(1-indenyl-3-ethyl) zirconium dichloride
Rac and meso dimethylsilanediyl (1-indenyl-2-ethyl)(1-indenyl-3-propyl) zirconium dichloride
Rac and meso 1,2 ethanediyl (1-indenyl-2-methyl)(1-indenyl-3-propyl) zirconium dichloride.
Rac and meso 1,2 ethanediyl (1-indenyl-2-ethyl)(1-indenyl-3-ethyl) zirconium dichloride
Rac and meso 1,2 ethanediyl (1-indenyl-2-ethyl)(1-indenyl-3-propyl)zirconium dichloride

6. Metallocene compound according to claim 1, selected from the group consisting of:
Rac and meso dimethylsilanediylbis (1-indenyl-3-ethyl) zirconium dichloride
Rac and meso dimethylsilanediylbis (1-indenyl-3-propyl) zirconium dichloride
Rac and meso dimethylsilanediylbis (1-indenyl-3-butyl) zirconium dichloride

7. Metallocene compound according to claim 1, selected from the group consisting of:
Rac and meso 1,2 ethanediylbis (1-indenyl-3-ethyl) zirconium dichloride
Rac and meso 1,2 ethanediylbis (1-indenyl-3-propyl) zirconium dichloride
Rac and meso 1,2 ethanediylbis (1-indenyl-3-butyl) zirconium dichloride

8. Metallocene compound according to claim 1, selected from the group consisting of:
Rac and meso dimethylsilanediyl (1-indenyl)(1-indenyl-3-ethyl) zirconium dichloride.
Rac and meso dimethylsilanediyl (1-indenyl)(1-indenyl-3-ethyl-3-propyl) zirconium dichloride
Rac and meso dimethylsilanediyl (1-indenyl) (1-indenyl-3-butyl) zirconium dichloride

9. Metallocene compound according to claim 1, selected from the group consisting of:
Rac and meso 1,2 ethanediyl (1-indenyl)(1-indenyl-3-methyl) zirconium dichloride
Rac and meso 1,2 ethanediyl (1-indenyl)(1-indenyl-3-ethyl) zirconium dichloride
Rac and meso 1,2 ethanediyl (1-indenyl)(1-indenyl-3-propyl) zirconium dichloride
Rac and meso 1,2 ethanediyl (1-indenyl)(1-indenyl-3-butyl) zirconium dichloride

10. Metallocene compound according to claim 1, selected from the group consisting of:
Rac and meso phenylmethylsilanediyl (1-indenyl)(1-indenyl-3-methyl) zirconium dichloride
Rac and meso phenylmethylsilanediyl (1-indenyl)(1-indenyl-3-ethyl) zirconium dichloride
Rac and meso phenylmethylsilanedyil (1-indenyl)(1-indenyl-3-propyl) zirconium dichloride.

11. A racemic stereoisomer of the bridged metallocene compound of claim 1 of formula (11): 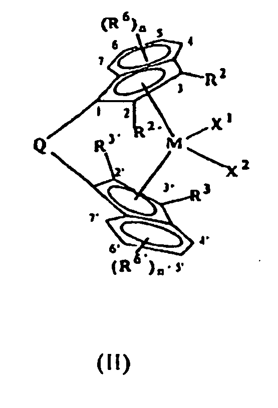 wherein:
M, R², R³, R^{2'}, R^{3'}, Q, X¹ and X² are those defined in claim 1;
R⁶ und R^{6,} are independently methyl or phenyl; und
n and n' are independently 0, 1 or 2.

12. A meso stereoisomer of the bridged metallocene compound of claim 1 of formula (III): 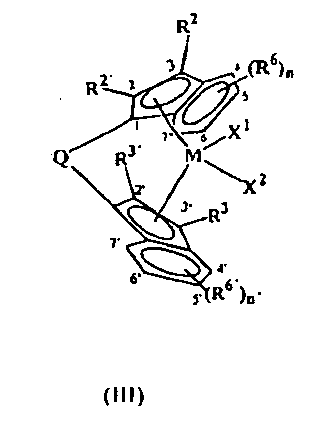 wherein:
M, R², R³ R^{2'}, R^{3'}, Q, X¹ and X² are those defined in claim 1;
R⁶ and R^{6,} are, independently, methyl or phenyl; and
n and n' are, independently, 0, 1 or 2.

13. Racemic or meso stereoisomer according to anyone of claims 11 or 12 wherein n and n' are 0.

14. Racemic or meso stereoisomer according to anyone of claims 11 to 13 wherein R² and R³ are independently selected from the group formed by hydrogen, methyl, ethyl, propyl, butyl, pentyl and hexyl.

15. Racemic or meso stereoisomer according to anyone of claims 11 to 14 wherein Q is a phenylmethylsilanediyl group, dimethylsilanediyl group or a 1,2 ethanediyl group.

16. A composition comprising a mixture of at least one racemic stereoisomer of formula (IIa) and at least one meso stereoisomer of formula (IIIa): 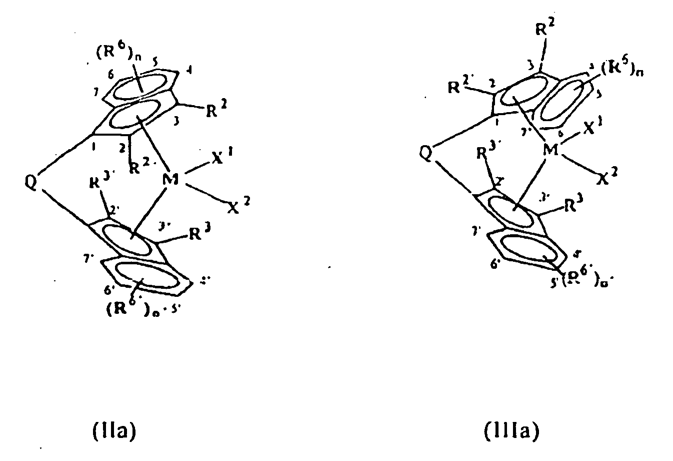 wherein:
M, Q, X¹ and X² are those defined in claim I;
R² and R³ bonded to the indenyl ligand at position 3 are, independently, hydrogen or a radical Rₐ, wherein Rₐ is a monovalent organic radical selected from C₁-C₂₀ alkyl, C₂-C₂₀ alkenyl, C₇-C₂₀ alkylaryl, said monovalent organic radical optionally containing oxygen and/or silicon atoms as substituents which are not bonded directly to the cyclopentadienyl ring moiety;
R² and R³ bonded to the indenyl ligand at position 2 are, independently, hydrogen or a radical Rₐ, wherein Rₐ is as defined above;
wherein at least one of R² and R³ is Rₐ, and
when R² is Rₐ, then R² is H,
when R³ is Rₐ, then R³ is H, and
when R² and R³ independently are Rₐ, then R² and R³ are simultaneously H;
R⁶ and R^{6,} are, independently, methyl or phenyl; and
n and n' are, independently, 0, 1 or 2.

17. Composition according to claim 16, which comprises a compound of formula (IIa) and/or a compound of formula (IIIa), wherein R² and R³ are, independently, selected from the group formed by hydrogen, methyl, ethyl, propyl, butyl, pentyl and hexyl.

18. Composition according to anyone ot claims 16 or 17 which comprises a compound of formula (IIa) and/or a compound of formula (IIIa), wherein Q is a phenylmethylsilanediyl group, a dimethylsilylene group or an ethylidene group.

19. A polymerization catalyst system comprising: a) at least one metallocene compound according to anyone of claims 1 to 15 or a composition according to anyone of claims 16 to 18 and b) a co-catalyst.

20. Polymerization catalyst system according to claim 19, wherein the co-catalyst is an aluminoxane selected from the group consisting of methyl-aluminoxane and modified methylaluminoxane, or a compound capable of forming an alkyl metallocene cation.

21. An heterogeneous polymerization catalyst system which comprises a polymerization catalyst system according to anyone of claims 19 or 20 and a support.

22. A process for the polymerization of C₂-C₂₀ alpha-olefins or for the copolymerization of ethylene and C₃-C₂₀ alpha-olefins which comprises the use of a polymerization catalyst system as defined in anyone of claims 19 to 21.

23. The process of claim 22, wherein ethylene is copolymerized with an alpha-olefin selected from propylene, I-butene, I-hexene, I-octene and mixtures thereof.

24. Use of the catalyst system as defined in anyone of claims 19 to 21 in a process for polymerization of C₂-C₂₀ alpha-olefins or for copolymerization of ethylene and C₃-C₂₀ alpha-olefins.

## Patentansprüche

1. Verbrückte Metallocenverbindung der Formel (I), die zwei Indenylliganden enthält, von denen zumindest einer an der 3-Position substituiert ist, worin die Indenylliganden durch eine verbrückende Gruppe verbunden und an ein Metallatom komplexgebunden sind: 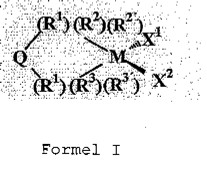 worin:
M Ti, Zr oder Hf ist;
R¹ ein Indenylligand ist, worin der Benzolring des
R¹ gegebenenfalls mit einem bis vier Substituenten substituiert ist, die gleich oder verschieden sind, ausgewählt aus C₁-C₂₀-Alkyl und C₆-C₂₀-Aryl;
Q eine divalente Gruppe der Formel =SiR⁴R⁵ oder -CHR⁴-CHR⁵- ist; worin R⁴ und R⁵ unabhängig voneinander Wasserstoffatome oder einwertige Reste sind, die aus Halogen, C₁-C₂₀-Alkyl, C₆-C₂₀-Aryl;
C₂-C₂₀-Alkenyl; C₇-C₂₀-Arylalkyl und
C₇-C₂₀-Alkylaryl, die gegebenenfalls Wasserstoff und/oder Siliziumatome als Substituenten enthalten, ausgewählt werden;
R² und R³, die an der 3-Position an R¹ gebunden sind, unabhängig voneinander Wasserstoff oder ein Rest Rₐ sind, worin Rₐ ein einwertiger organischer Rest ist, der aus C₁-C₂₀-Alkyl, C₂-C₂₀-Alkenyl und C₇-C₂₀-Alkylaryl ausgewählt wird, wobei der einwertige organische Rest gegebenenfalls Sauerstoff und/oder Siliziumatome als Substituenten enthält, die nicht direkt an den Cyclopentadienylring gebunden sind;
R^{2'} und R^{3'}, die an der 2-Position an R¹ gebunden sind, unabhängig voneinander Wasserstoff oder ein Rest Rₐ sind, worin Rₐ wie oben definiert ist;
worin zumindest ein Vertreter aus R² und R³ Rₐ ist, und
wenn R² Rₐ ist, R^{2'} H ist, oder
wenn R³ Rₐ ist, R^{3'} H ist, und
wenn R² und R³ unabhängig voneinander beide Rₐ sind, R^{2'} und R^{3'} gleichzeitig H sind, mit der Maßgabe, dass
wenn R^{2'} und R^{3'} gleichzeitig H sind, R² und R³ nicht gleichzeitig Methyl (Me), Isopropyl (i-Pr) oder tert-Butyl (t-Bu) im Fall des rac-Isomers sind; oder
wenn R^{2'} und R^{3'} gleichzeitig Wasserstoff sind, M Zr oder Hf ist, X¹ und X² jeweils Cl sind, und Q =SiMe₂ ist, R² und R³ nicht gleichzeitig Pentenyl im Fall der rac- und meso-Isomere sind;
oder wenn R^{2'} und R^{3'} gleichzeitig Wasserstoff sind, M Zr ist, X¹ und X² jeweils Cl sind, und Q =SiMe₂ ist, R² und R³ nicht gleichzeitig para-Tolyl im Fall der rac- und meso-Isomere sind;
oder wenn R² H ist, R³ nicht Me ist, oder wenn R² Me ist, R³ nicht H ist im Fall der rac- und meso-Isomere;
oder wenn R², R^{2'}, R^{3'} H sind, M Zr ist, X¹ und X² jeweils Cl sind, und Q =SiMe₂ ist, R³ nicht Benzyl ist, oder wenn R² Benzyl ist, R^{2'} und R^{3'} jeweils H sind, M Zr ist, X¹ und X² jeweils Cl sind, und Q =SiMe₂ ist, R³ nicht H ist im Fall der rac- und meso-Isomere; und
X¹ und X² unabhängig einwertige Liganden sind, die aus Wasserstoff, Halogen, C₁-C₂₀-Alkyl, C₆-C₂₀-Aryl; C₇-C₂₀-Alkylaryl, C₇-C₂₀-Arylalkyl, C₁-C₂₀-Hydrocarbyloxy-, C₆-C₂₀-Aryloxy, C₁-C₂₀-Di(alkyl)amido und Carboxylaten ausgewählt werden;
ihre racemischen oder meso-Stereoisomere und Mischungen davon.

2. Verbrückte Metallocenverbindung gemäß Anspruch 1, worin:
R^{2'} und R^{3'}, die an der 2-Position an R¹ gebunden sind, jeweils Wasserstoff sind;
R² und R³, die an der 3-Position an R¹ gebunden sind, unabhängig aus Ethyl, Propyl, Butyl, Pentyl und Hexyl ausgewählt werden; und
X¹ und X² gleiche oder verschiedene einwertige Liganden sind, die aus den Halogenen ausgewählt werden.

3. Metallocenverbindung gemäß einem der Ansprüche 1 oder 2, worin das verbrückte Metallocen ein rac-Stereoisomer ist.

4. Metallocenverbindung gemäß einem der Ansprüche 1 oder 2, worin das verbrückte Metallocen eine Mischung aus rac- und meso-Stereoisomeren ist.

5. Metallocenverbindung gemäß Anspruch 1, ausgewählt aus der Gruppe, die aus Folgendem besteht:
meso-Dimethylsilandiylbis(1-indenyl-3-methyl)zirkoniumdichlorid
rac- und meso-Dimethylsilandiylbis(1-indenyl-3-pentylzirkoniumdichlorid
rac- und meso-Dimethylsilandiylbis(1-indenyl-3-hexyl)-zirkoniumdichlorid
rac- und meso-1,2-Ethandiylbis(1-indenyl-3-pentyl)-zirkoniumdichlorid
rac- und meso-1,2-ethandiylbis(1-indenyl-3-hexyl)-zirkoniumdichlorid
rac- und meso-Dimethylsilandiyl(1-indenyl)(1-indenyl-3-pentyl)zirkoniumdichlorid
rac- und meso-Dimethylsilandiyl(1-indenyl)(1-indenyl-3-hexyl)zirkoniumdichlorid
rac- und meso-1,2-Ethandiyl(1-indenyl) (1-indenyl-3-pentyl)zirkoniumdichlorid
rac- und meso-1,2-Ethandiyl(1-indenyl)(1-indenyl-3-hexyl)zirkoniumdichlorid
rac- und meso-Phenylmethylsilandiyl(1-indenyl) (1-indenyl-3-butyl)zirkoniumdichlorid
rac- und meso-Phenylmethylsilandiyl(1-indenyl) (1-indenyl-3-pentyl)zirkoniumdichlorid
rac- und meso-Phenylmethylsilandiyl(1-indenyl)(1-indenyl-3-hexyl)zirkoniumdichlorid
rac- und meso-Dimethylsilandiyl(1-indenyl-3-methyl)(1-indenyl-3-ethyl)zirkoniumdichlorid
rac- und meso-Dimethylsilandiyl(1-indenyl-3-methyl)(1-indenyl-3-propyl)zirkoniumdichlorid
rac- und meso-Dimethylsilandiyl(1-indenyl-3-methyl)(1-indenyl-3-butyl)zirkoniumdichlorid
rac- und meso-Dimethylsilandiyl(1-indenyl-3-methyl)(1-indenyl-3-pentyl)zirkoniumdichlorid
rac- und meso-Dimethylsilandiyl(1-indenyl-3-methyl)(1-indenyl-3-hexyl)zirkoniumchlorid
rac- und meso-Dimethylsilandiyl(1-indenyl-3-ethyl)(1-indenyl-3-propyl)zirkoniumdichlorid
rac- und meso-Dimethylsilandiyl(1-indenyl-3-ethyl)(1-indenyl-3-butyl) zirkoniumdichlorid
rac- und meso-Dimethylsilandiyl(1-indenyl-3-ethyl)(1-indenyl-3-pentyl)zirkoniumdichlorid
rac- und meso-Dimethylsilandiyl(1-indenyl-3-ethyl)(1-indenyl-3-hexyl)zirkoniumdichlorid
rac- und meso-1,2-Ethandiyl(1-indenyl-3-methyl)(1-indenyl-3-ethyl)zirkoniumdichlorid
rac- und meso-1,2-Ethandiyl(1-indenyl-3-methyl)(1-indenyl-3-propyl)zirkoniumdichlorid
rac- und meso-1,2-Ethandiyl(1-indenyl-3-methyl)(1-indenyl-3-butyl)zirkoniumdichlorid
rac- und meso-1,2-Ethandiyl(1-indenyl-3-methyl)(1-indenyl-3-pentyl)zirkoniumdichlorid
rac- und meso-1,2-Ethandiyl(1-indenyl-3-methyl)(1-indenyl-3-hexyl)zirkoniumdichlorid
rac- und meso-1,2-Ethandiyl(1-indenyl-3-ethyl) (1-indenyl-3-propyl)zirkoniumdichlorid
rac- und meso-Ethylenbis(1-indenyl-3-ethyl)(1-indenyl-3-butyl)zirkoniumdichlorid
rac- und meso-Ethylenbis(1-indenyl-3-ethyl)(1-indenyl-3-pentyl)zirkoniumdichlorid
rac- und meso-Ethylenbis(1-indenyl-3-ethyl)(1-indenyl-3-hexyl)zirkoniumdichlorid
rac- und meso-Dimethylsilandiyl(1-indenyl-3-methyl) (1-indenyl-3-ethyl-4,7-dimethyl)zirkoniumdichlorid
rac- und meso-Dimethylsilandiyl(1-indenyl-3-methyl)(1-indenyl-3-propyl-4,7-dimethyl)zirkoniumdichlorid
rac- und meso-Dimethylsilandiyl(1-indenyl-3-methyl)(1-indenyl-3-butyl-4,7-dimethyl)zirkoniumdichlorid
rac- und meso-Dimethylsilan(1-indenyl-3-methyl)(1-indenyl-3-ethyl-4-phenyl)zirkoniumdichlorid
rac- und meso-Dimethylsilandiyl(1-indenyl-3-methyl) (1-indenyl-3-propyl-A-phenyl)zirkoniumdichlorid
rac- und meso-Dimethylsilandiyl(1-indenyl-3-methyl)(1-indenyl-3-butyl-4-phenyl)zirkoniumdichlorid
rac- und meso-Dimethylsilandiyl(1-indenyl-3-ethyl) (1-indenyl-3-propyl-4-phenyl)zirkroniumdichlorid
rac- und meso-Dimethylsilandiyl(1-indenyl-3-ethyl) (1-indenyl-3-butyl-4-phenyl)zirkoniumdichlorid
rac- und meso-Dimethylsilandiyl(1-indenyl-3-ethyl) (1-indenyl-3-propyl-4,7-dimethyl)zirkoniumdichlorid
rac- und meso-Dimethylsilandiyl(1-indenyl-3-ethyl)(1-indenyl-3-butyl-4,7-dimethyl)zirkoniumdichlorid
rac- und meso-Dimethylsilandiyl(1-indenyl-2-methyl) (1-indenyl-3-methyl)zirkoniumdichlorid
rac- und meso-Dimethylsilandiyl(1-indenyl-2-methyl)(1-indenyl-3-ethyl)zirkoniumdichlorid
rac- und meso-Dimethylsilandiyl(1-indenyl-2-methyl)(1-indenyl-3-propyl) zirkoniumdichlorid
rac- und meso-Dimethylsilandiyl(1-indenyl-2-ethyl)(1-indenyl-3-ethyl)zirkoniumdichlorid
rac- und meso-Dimethylsilandiyl(1-indenyl-2-ethyl) (1-indenyl-3-propyl)zirkoniumdichlorid
rac- und meso-1,2-Ethandiyl(1-indenyl-2-methyl)(1-indenyl-3-propyl)zirkoniumdichlorid
rac- und meso-1,2-Ethandiyl(1-indenyl-2-ethyl)(1-indenyl-3-ethyl)zirkoniumdichlorid
rac- und meso-1,2-Ethandiyl(1-indenyl-2-ethyl)(1-indenyl-3-propyl)zirkoniumdichlorid.

6. Metallocenverbindung gemäß Anspruch 1, die aus der Gruppe ausgewählt wird, die aus Folgendem besteht:
rac- und meso-Dimethylsilandiylbis(1-indenyl-3-ethyl)zirkoniumdichlorid
rac- und meso-Dimethylsilandiylbis(1-indenyl-3-propyl)zirkoniumdichlorid
rac- und meso-Dimethylsilandiylbis(1-indenyl-3-butyl)zirkoniumdichlorid.

7. Metallocenverbindung gemäß Anspruch 1, die aus der Gruppe ausgewählt wird, die aus Folgendem besteht:
rac- und meso-1,2-Ethandiylbis(1-indenyl-3-ethyl)zirkoniumdichlorid
rac- und meso-1,2-Ethandiylbis(1-indenyl-3-proyl)-zirkoniumdichlorid
rac- und meso-1,2-Ethandiylbis(1-indenyl-3-butyl)zirkoniumdichlorid.

8. Metallocenverbindung gemäß Anspruch 1, die aus der Gruppe ausgewählt wird, die aus Folgendem besteht:
rac- und meso-Dimethylsilandiyl(1-indenyl) (1-indenyl-3-ethyl)zirkoniumdichlorid
rac- und meso-Dimethylsilandiyl(1-indenyl)(1-indenyl-3-propyl)zirkoniumdichlorid
rac- und meso-Dimethylsilandiyl(1-indenyl)(1-indenyl-3-butyl)zirkoniumdichlorid.

9. Metallocenverbindung gemäß Anspruch 1, die aus der Gruppe ausgewählt wird, die aus Folgendem besteht:
rac- und meso-1,2-Ethandiyl(1-indenyl)(1-indenyl-3-methyl)zirkoniumdichlorid
rac- und meso-1,2-Ethandiyl(1-indenyl)(1-indenyl-3-ethyl)zirkoniumdichlorid
rac- und meso-1,2-Ethandiyl(1-indenyl)(1-indenyl-3-propyl)zirkoniumdichlorid
rac- und meso-1,2-Ethandiyl(1-indenyl)(1-indenyl-3-butyl)zirkoniumdichlorid.

10. Metallocenverbindung gemäß Anspruch 1, die aus der Gruppe ausgewählt ist, die aus Folgendem besteht:
rac- und meso-Phenylmethylsilandiyl(1-indenyl)(1-indenyl-3-methyl)zirkoniumdichlorid
rac- und meso-Phenylmethylsilandiyl(1-indenyl)(1-indenyl-3-ethyl)zirkoniumdichlorid
rac- und meso-Phenylmethylsilandiyl(1-indenyl)(1-indenyl-3-propyl)zirkoniumdichlorid.

11. Racemisches Stereoisomer der verbrückten Metallocenverbindung aus Anspruch 1 der Formel (II): 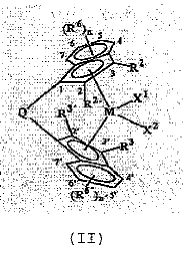 worin:
M, R², R³, R^{2'}, R^{3'}, Q, X¹ und X² so wie in Anspruch 1 definiert sind;
R⁶ und R^{6'} jeweils unabhängig voneinander Methyl oder Phenyl sind; und
n und n' unabhängig voneinander 0, 1 oder 2 sind.

12. Meso-Stereoisomer der verbrückten Metallocenverbindung aus Anspruch 1 der Formel (III): 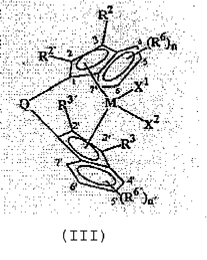 worin:
M, R², R³, R^{2'}, R^{3'}, Q, X¹ und X² so wie in Anspruch 1 definiert sind;
R⁶ und R^{6'} jeweils unabhängig voneinander Methyl oder Phenyl sind;
und
n und n' unabhängig voneinander 0, 1 oder 2 sind.

13. Racemisches oder meso-Stereoisomer gemäß einem der Ansprüche 11 oder 12, worin n und n' 0 sind.

14. Racemisches oder meso-Stereoisomer gemäß einem der Ansprüche 11 bis 13, worin R² und R³ unabhängig voneinander aus der Gruppe ausgewählt werden, die von Wasserstoff, Methyl, Ethyl, Propyl, Butyl, Pentyl und Hexyl gebildet wird.

15. Racemisches oder meso-Stereoisomer gemäß einem der Ansprüche 11 bis 14, worin Q eine Phenylmethylsilandiylgruppe, Dimethylsilandiylgruppe oder 1,2-Ethandiylgruppe ist.

16. Zusammensetzung, die eine Mischung von zumindest einem racemischen Stereoisomer der Formel (IIa) und zumindest einem meso-Stereoisomer der Formel (IIIa) umfasst: 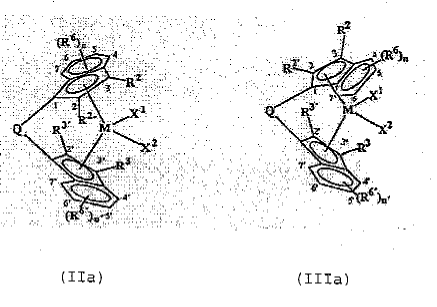 worin:
M, Q, X¹ und X² so wie in Anspruch 1 definiert sind;
R² und R³, die an der 3-Position an den Indenylliganden gebunden sind, unabhängig voneinander Wasserstoff oder ein Rest Rₐ sind, worin Rₐ ein einwertiger organischer Rest ist, der aus C₁-C₂₀-Alkyl, C₂-C₂₀-Alkenyl, C₇-C₂₀-Alkylaryl ausgewählt wird, worin der einwertige organische Rest gegebenenfalls Sauerstoff- und/oder Siliziumatome als Substituenten enthält, die nicht direkt an den Cyclopentadienylring gebunden sind;
R^{2'} und R^{3'}, die an der 2-Position an den Indenylliganden gebunden sind, unabhängig Wasserstoff oder ein Rest Rₐ sind, worin Rₐ wie oben definiert ist;
worin zumindest ein Vertreter aus R² und R³ Rₐ ist, und
wenn R² Rₐ ist, R^{2'} H ist,
wenn R³ Rₐ ist, R^{3'} H ist, und
wenn R² und R³ unabhängig voneinander Rₐ sind, R^{2'} und R^{3'} gleichzeitig H sind;
R⁶ und R^{6'} unabhängig voneinander Methyl oder Phenyl sind; und
n und n' unabhängig voneinander 0, 1 oder 2 sind.

17. Zusammensetzung gemäß Anspruch 16, die eine Verbindung der Formel (IIa) und/oder eine Verbindung der Formel (IIIa) umfasst, worin R² und R³ unabhängig voneinander aus der Gruppe ausgewählt werden, die von Wasserstoff, Methyl, Ethyl, Propyl, Butyl, Pentyl und Hexyl gebildet wird.

18. Zusammensetzung gemäß einem der Ansprüche 16 oder 17, die eine Verbindung der Formel (IIa) und/oder eine Verbindung der Formel (IIIa) umfasst, worin Q eine Phenylmethylsilandiylgruppe, eine Dimethylsilylengruppe oder eine Ethylidengruppe ist.

19. Polymerisationskatalysatorsystem, das folgendes umfasst: a) zumindest eine Metallocenverbindung gemäß einem der Ansprüche 1 bis 15 oder eine Zusammensetzung gemäß einem der Ansprüche 16 bis 18 und b) einen Cokatalysator.

20. Polymerisationskatalysatorsystem gemäß Anspruch 19, worin der Cokatalysator ein Aluminoxan, das aus der Gruppe ausgewählt wird, die aus Methylaluminoxan und modifiziertem Methylaluminoxan besteht, oder eine Verbindung ist, die ein Alkylmetallocenkation bilden kann.

21. Heterogenes Polymerisationskatalysatorsystem, das ein Polymerisationskatalysatorsystem gemäß einem der Ansprüche 19 oder 20 und einen Träger umfasst.

22. Verfahren zur Polymerisation von C₂C₂₀-α-Olefinen oder zur Copolymerisation von Ethylen und C₃-C₂₀-α-Olefinen, das die Verwendung eines Polymerisationskatalysatorsystems, wie in einem der Ansprüche 19 bis 20 definiert, umfasst.

23. Verfahren aus Anspruch 22, worin Ethylen mit einem α-Olefin, das aus Propylen, 1-Buten, 1-Hexen, 1-Octen und Mischungen davon ausgewählt wird, copolymerisiert wird.

24. Verwendung des Katalysatorsystems, wie in einem der Ansprüche 19 bis 21 definiert, in einem Verfahren zur Polymerisation von C₂-C₂₀-α-Olefinen oder zur Copolymerisation von Ethylen und C₃-C₂₀-α-Olefinen.

## Revendications

1. Composé métallocène ponté contenant deux ligands indényles, dans lequel au moins l'un d'entre eux est substitué en position 3, lié par un groupe de pontage et formant un complexe avec un atome métallique de formule (I) : 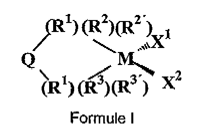 où:
M représente Ti, Zr ou Hf ;
R¹ représente un ligand indényle, le noyau benzénique de R¹ étant facultativement substitué par un à quatre substituants, identiques ou différents, qui sont choisis parmi un alkyle en C₁ à C₂₀ et un aryle en C₆ à C₂₀;
Q représente un groupe divalent de formule =SIR⁴R⁵ ou -CH R⁴-CH R⁵- ; dans lequel R⁴ et R³ représentent, indépendamment l'un de l'autre, des atomes hydrogène ou des radicaux monovalents choisis parmi un halogène, un alkyle en C₁ à C₂₀, un aryle en C₆ à C₂₀; un alcényle en C₂ à C₂₀; un arylalkyle en C₇ à C₂₀ et un alkylaryle en C₇ à C₂₀, contenant facultativement des atomes d'oxygène et/ou de silicium en tant que substituants ;
R² et R³ liés à R¹ en position 3 représentent, indépendamment l'un de l'autre, l'hydrogène ou un radical Rₐ, Rₐ représentant un radical organique monovalent choisi parmi un alkyle en C₁ à C₂₀, un alcényle en C₂ à C₂₀ et un alkylaryle en
C₇ à C₂₀, ledit radical organique monovalent contenant facultativement des atomes d'oxygène et/ou de silicium en tant que substituants qui ne sont pas directement liés au groupe fonctionnel à noyau cyclopentadiényle ;
R^{2'} et R^{3'} liés à R¹ en position 2 représentent, indépendamment l'un de l'autre, l'hydrogène ou un radical Rₐ, Rₐ étant tel que défini ci-dessus ;
dans lequel au moins un élément parmi R² et R³ représente Rₐ, et
lorsque R² représente Rₐ, alors R^{2'} représente H, ou
lorsque R³ représente Rₐ, alors R^{3'} représente H, et
lorsque R² et R³ représentent, indépendamment, tous les deux R₃,
alors R^{2'} et R^{3'} représentent simultanément H, à condition que
lorsque R^{2'} et R^{3'} représentent simultanément l'hydrogène, alors R² et R³ ne représentent pas simultanément un méthyle (Me), un iso-propyle (i-Pr) ou un tert-butyle (t-Bu) pour l'isomère rac ; ou
lorsque R^{2'} et R^{3'} représentent simultanément l'hydrogène, M représente Zr ou Hf, X¹ et X² représentent tous les deux Cl et Q représente =SiMe₂, alors R² et R³ ne représentent pas simultanément le radical pentényle pour les isomères rac et méso ;
ou lorsque R^{2'} et R^{3'} représentent simultanément l'hydrogène, M représente Zr, X¹ et X² représentent tous les deux Cl et Q représente =SiMe₂, alors R² et R³ ne représentent pas simultanément le groupement para-tolyle pour les isomères rac et méso ;
ou lorsque R² représente H alors R³ ne représente pas Me, ou lorsque R² représente Me alors R³ ne représente pas H pour les isomères rac et méso ;
ou lorsque R², R^{2'}, R^{3'} représentent H, M représente Zr, X¹ et X² représentent tous les deux Cl et Q représente =SiMe₂, alors R³ ne représente pas le radical benzyle, ou lorsque R² représente le radical benzyle, R^{2'}et R^{3'} représentent tous les deux H, M représente Zr, X¹ et X² représentent tous les deux Cl et Q représente =SiMe₂, alors R³ ne représente pas H pour les isomères rac et méso ; et
X¹ et X² représentent, indépendamment l'un de l'autre, des ligands monovalents choisis parmi l'hydrogène, un halogène, un alkyle en C₁ à C₂₀, un aryle en C₆ à C₂₀, un alkylaryle en C₇ à C₂₀, un arylalkyle en C₇ à C₂₀, un hydrocarbyloxy en C₁ à C₂₀, un aryloxy en C₆ à C₂₀, un di(alkyl)amido en C₁ à C₂₀ et un carboxylate ;
ses stéréoisomères racémiques ou méso et leurs mélanges.

2. Composé métallocène ponté selon la revendication 1
dans lequel :
R^{2'} et R^{3'} liés à R¹ en position 2 représentent tous les deux l'hydrogène ;
R² et R³ liés à R¹ en position 3 sont choisis, indépendamment, parmi les radicaux éthyle, propyle, butyle, pentyle et hexyle ; et
X¹ et X² représentent des ligands monovalents identiques ou différents choisis parmi les halogènes.

3. Composé métallocène selon l'une quelconque des revendications 1 ou 2, dans lequel le métallocène ponté est un stéréoisomère racémique.

4. Composé métallocène selon l'une quelconque des revendications 1 ou 2, dans lequel le métallocène ponté est un mélange de stéréoisomères racémique et méso.

5. Composé métallocène selon la revendication 1, choisi parmi le groupe constitué de:
Dichlorure de diméthylsilanediylbis (1-indényl-3-méthyl) zirconium méso
Dichlorure de diméthylsilanediylbis (1-indényl-3-pentyle) zirconium rac et méso
Dichlorure de diméthylsilanediylbis (1-indényl-3-hexyl) zirconium rac et méso
Dichlorure de 1,2 éthanediylbis (1-indényl-3-pentyl) zirconium rac et méso
Dichlorure de 1,2 éthanediylbis (1-indényl-3-hexyl) zirconium rac et méso
Dichlorure de diméthylsilanediyl (1-indényl)(1-indényl-3-pentyl) zirconium rac et méso
Dichlorure de diméthylsilanediyl (1-indényl)(1-indényl-3-hexyl) zirconium rac et méso
Dichlorure de 1,2 éthanediyl (1-indényl)(1-indényl-3-pentyl) zirconium rac et méso
Dichlorure de 1,2 éthanediyl (1-indényl)(1-indényl-3-hexyl) zirconium rac et méso
Dichlorure de phénylméthylsilanediyl (1-indényl)(1-indényl-3-butyl) zirconium rac et méso
Dichlorure de phénylméthylsilanediyl (1-indényl)(1-indényl-3-pentyl) zirconium rac et méso
Dichlorure de phénylméthylsilanediyl (1-indényl)(1-indényl-3-hexyl) zirconium rac et méso
Dichlorure de diméthylsilanediyl (1-indényl-3-méthyl)(1-indényl-3-éthyl) zirconium rac et méso
Dichlorure de diméthylsilanediyl (1-indényl-3-méthyl)(1-indényl-3-propyl) zirconium rac et méso
Dichlorure de diméthylsilanediyl (1-indényl-3-méthyl)(1-indényl-3-butyl) zirconium rac et méso
Dichlorure de diméthylsilanediyl (1-indényl-3-méthyl)(1-indényi-3-peiltyl) zirconium rac et méso
Dichlorure de diméthylsilanediyl (1-indényl-3-méthyl)(1-indényl-3-hexyl) zirconium rac et méso
Dichlorure de diméthylsilanediyl (1-indényl-3-éthyl)(1-indényl-3-propyl) zirconium rac et méso
Dichlorure de diméthylsilanediyl (1-indényl-3-éthyl)(1-indényl-3-butyl) zirconium rac et méso
Dichlorure de diméthylsilanediyl (1-indényl-3-éthyl)(1-indényl-3-pentyl) zirconium rac et méso
Dichlorure de diméthylsilanediyl (1-indényl-3-éthyl)(1-indényl-3-hexyl) zirconium rac et méso
Dichlorure de 1,2 éthanediyl (1-indényl-3-méthyl)(1-indényl-3-éthyl) zirconium rac et méso
Dichlorure de 1,2 éthanediyl (1-indényl-3-méthyl)(1-indényl-3-propyl) zirconium rac et méso
Dichlorure de 1,2 éthanediyl (1-indényl-3-méthyl)(1-indényl-3-butyl) zirconium rac et méso
Dichlorure de 1,2 éthanediyl (1-indényl-3-méthyl)(1-indényl-3-pentyl) zirconium rac et méso
Dichlorure de 1,2 éthanediyl (1-indényl-3-méthyl)(1-indényl-3-hexyl) zirconium rac et méso
Dichlorure de 1,2 éthanediyl (1-indényl-3-ethyl)(1-indényl-3-propyl) zirconium rac et méso
Dichlorure d'éthylènebis (1-indényl-3-éthyl)(1-indényl-3-butyl) zirconium rac et méso
Dichlorure d'éthylènebis (1-indényl-3-éthyl)(1-indényl-3-pentyl) zirconium rac et méso
Dichlorure d'éthylènebis (1-indényl-3-éthyl)(1-indényl-3-hexyl) zirconium rac et méso
Dichlorure de diméthylsilanediyl (1-indényl-3-méthyl)(1-indényl-3-éthyl-4,7-diméthyl) zirconium rac et méso
Dichlorure de diméthylsilanediyl (1-indényl, 3-méthyl)(1-indényl-3-propyl-4,7-diméthyl) zirconium rac et méso
Dichlorure de diméthylsilanediyl (1-indényl-3-méthyl)(1-indényl-3-butyl-4,7-diméthyl) zirconium rac et méso
Dichlorure de diméthylsilanediyl (1-indényl-3-méthyl)(1-indényl-3-éthyl-4-phényl) zirconium rac et méso
Dichlorure de diméthylsilanediyl (1-indényl-3-méthyl)(1-indényl-3-propyl-4-phényl) zirconium rac et méso
Dichlorure de diméthylsilanediyl (1-indényl-3-méthyl)(1-indényl-3-butyl-4-phényl) zirconium rac et méso
Dichlorure de diméthylsilanediyl (1-indényl-3-éthyl)(1-indényl-3-propyl-4-phényl) zirconium rac et méso
Dichlorure de diméthylsilanediyl (1-indényl-3-éthyl)(1-indényl-3-butyl-4-phényl) zirconium rac et méso
Dichlorure de diméthylsilanediyl (1-indényl-3-éthyl)(1-indényl-3-propyl-4,7-diméthyl) zirconium rac et méso
Dichlorure de diméthylsilanediyl (1-indényl-3-éthyl)(1-indényl-3-butyl-4,7-diméthyl) zirconium rac et méso
Dichlorure de diméthylsilanediyl (1-indényl-2-méthyl)(1-indényl-3-méthyl) zirconium rac et méso
Dichlorure de diméthylsilanediyl (1-indényl-2-méthyl)(1-indényl-3-éthyl) zirconium rac et méso
Dichlorure de diméthylsilanediyl (1-indényl-2-méthyl)(1-indényl-3-propyl) zirconium rac et méso
Dichlorure de diméthylsilanediyl (1-indényl-2-éthyl)(1-indényl-3-éthyl) zirconium rac et méso
Dichlorure de diméthylsilanediyl (1-indényl-2-éthyl)(1-indényl-3-propyl) zirconium rac et méso
Dichlorure de 1,2 éthanediyl (1-indényl-2-méthyl)(1-indényl-3-propyl) zirconium rac et méso
Dichlorure de 1,2 éthanediyl (1-indényl-2-éthyl)(1-indényl-3-éthyl) zirconium rac et méso
Dichlorure de 1,2 éthanediyl (1-indényl-2-éthyl)(1-indényl-3-propyl) zirconium rac et méso.

6. Composé métallocène selon la revendication 1, choisi parmi le groupe constitué de :
Dichlorure de diméthylsilanediylbis (1-indényl-3-éthyl) zirconium rac et méso
Dichlorure de diméthylsilanediylbis (1-indényl-3-propyl) zirconium rac et méso
Dichlorure de diméthylsilanediylbis (1-indényl-3-butyl) zirconium rac et méso.

7. Composé métallocène selon la revendication 1, choisi parmi le groupe constitué de:
Dichlorure de 1,2 éthanediylbis (1-indényl-3-éthyl) zirconium rac et méso
Dichlorure de 1,2 éthanediylbis (1-indényl-3-propyl) zirconium rac et méso
Dichlorure de 1,2 éthanediylbis (1-indényl-3-butyl) zirconium rac et méso.

8. Composé métallocène selon la revendication 1, choisi parmi le groupe constitué de:
Dichlorure de diméthylsilanediyl (1-indényl)(1-indényl-3-éthyl) zirconium rac et méso
Dichlorure de diméthylsilanediyl (1-indényl)(1-indényl-3-propyl) zirconium rac et méso
Dichlorure de diméthylsilanediyl (1-indényl) (1-indényl-3-butyl) zirconium rac et méso

9. Composé métallocène selon la revendication 1, choisi parmi le groupe constitué de :
Dichlorure de 1,2 éthanediyl (1-indényl)(1-indényl-3-méthyl) zirconium rac et méso
Dichlorure de 1,2 éthanediyl (1-indényl)(1-indényl-3-éthyl) zirconium rac et méso
Dichlorure de 1,2 éthanediyl (1-indényl)(1-indényl-3-propyl) zirconium rac et méso
Dichlorure de 1,2 éthanediyl (1-indényl)(1-indényl-3-butyl) zirconium rac et méso

10. Composé métallocène selon la revendication 1, choisi parmi le groupe constitué de :
Dichlorure de phénylméthylsilanediyl (1-indényl)(1-indényl-3-méthyl) zirconium rac et méso
Dichlorure de phénylméthylsilanediyl (1-indényl)(1-indényl-3-éthyl) zirconium rac et méso
Dichlorure de phénylméthylsilanedyil (1-indényl)(1-indényl-3-propyl) zirconium rac et méso.

11. Stéréoisomère racémique du composé métallocène ponté de la revendication 1 de formule (II) : 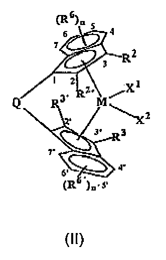 où:
M, R², R³, R^{2'}, R^{3'}, Q, X¹ et X² représentent ceux définis dans la revendication 1 ;
R⁶ et R^{6'} représentent, indépendamment l'un de l'autre, un radical méthyle ou phényle ; et
n et n' sont indépendamment égaux à 0, 1 ou 2.

12. Stéréoisomère méso du composé métallocène ponté de la revendication 1 de formule (III) : 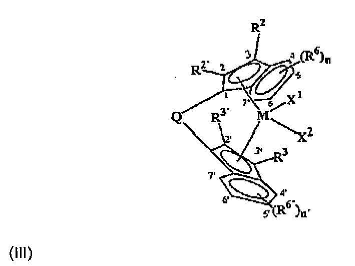 où :
M, R², R³, R^{2'}, R^{3'}, Q, X¹ et X² représentent ceux définis dans la revendication 1;
R⁶ et R^{6'} représentent, indépendamment l'un de l'autre, un radical méthyle ou phényle ; et
n et n' sont indépendamment égaux à 0, 1 ou 2.

13. Stéréoisomère racémique ou méso selon l'une quelconque des revendications 11 ou 12 dans lequel n et n' sont égaux à 0.

14. Stéréoisomère racémique ou méso selon l'une quelconque des revendications 11 à 13 dans lequel R² et R³ sont indépendamment choisis parmi le groupe formé par l'hydrogène, un méthyle, un éthyle, un propyle, un butyle, un pentyle et un hexyle.

15. Stéréoisomère racémique ou méso selon l'une quelconque des revendications 11 à 14 dans lequel Q représente un groupe phénylméthylsilanediyle, un groupe diméthylsilanediyle ou un groupe 1,2 éthanediyle.

16. Composition comportant un mélange d'au moins un stéréoisomère racémique de formule (IIa) et d'au moins un stéréoisomère méso de formule (IIIa) : 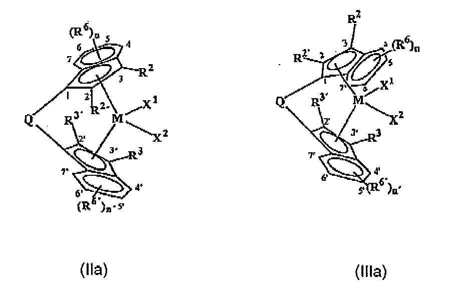 où:
M, Q, X¹ et X² représentent ceux définis dans la revendication 1 ;
R² et R³ liés au ligand indényle en position 3 représentent, indépendamment l'un de l'autre, l'hydrogène ou un radical Rₐ, Rₐ représentant un radical organique monovalent choisi parmi un alkyle en C₁ à C₂₀, un alcényle en C₂ à C₂₀, un alkylaryle en Cl à C₂₀, ledit radical organique monovalent contenant facultativement des atomes d'oxygène et/ou de silicium en tant que substituants qui ne sont pas directement liés au groupe fonctionnel à anneau cyclopentadiényle ;
R^{2'} et R^{3'} liés au ligand indényle en position 2 représentent, indépendamment l'un de l'autre, l'hydrogène ou un radical Rₐ, Rₐ étant tel que défini ci-dessus ;
dans lequel au moins un élément parmi R² et R³ représente Rₐ, et
lorsque R² représente Rₐ, alors R^{2'} représente H,
lorsque R³ représente Rₐ, alors R^{3'} représente H, et
lorsque R² et R³ représentent indépendamment Rₐ, alors R^{2'} et R^{3'} représentent simultanément H ;
R⁶ et R^{6'} représentent, indépendamment l'un de l'autre, un radical méthyle ou phényle ; et
n et n' sont indépendamment égaux à 0, 1 ou 2.

17. Composition selon la revendication 16, comportant un composé de formule (IIa) et/ou un composé de formule (IIIa), dans lequel R² et R³ sont choisis, indépendamment, parmi le groupe formé par l'hydrogène, un méthyle un éthyle, un propyle, un butyle, un pentyle et un hexyle.

18. Composition selon l'une quelconque des revendications 16 ou 17 comportant un composé de formule (IIa) et/ou un composé de formule (IIIa), dans lequel Q représente un groupe phénylméthylsilanediyle, un groupe diméthylsilylène ou un groupe éthylidène.

19. Système de catalyseur de polymérisation comportant : a) au moins un composé métallocène selon l'une quelconque des revendications 1 à 15 ou une composition selon l'une quelconque des revendications 16 à 18, et b) un co-catalyseur.

20. Système de catalyseur de polymérisation selon la revendication 19, dans lequel le co-catalyseur est un aluminoxane choisi parmi le groupe constitué de méthyl-aluminoxane et de méthyl-aluminoxane modifié, ou un composé capable de former un cation métallocène alkyle.

21. Système de catalyseur de polymérisation hétérogène comportant un système de catalyseur de polymérisation selon l'une quelconque des revendications 19 ou 20 et un support.

22. Procédé de polymérisation d'alpha-oléfines en C₂ à C₂₀ ou de copolymérisation d'éthylène et d'alpha-oléfines en C₃ à C₂₀, comportant l'utilisation d'un système de catalyseur de polymérisation tel que défini dans l'une quelconque des revendications 19 à 21.

23. Procédé selon la revendication 22, dans lequel l'éthylène est copolymérisé avec une alpha-oléfine choisie parmi le propylène, le 1-butène, le 1-hexène, le 1-octène et leurs mélanges.

24. Utilisation du système de catalyseur selon l'une quelconque des revendications 19 à 21 dans un procédé de polymérisation d'alpha-oléfines en C₂ à C₂₀ ou de copolymérisation d'éthylène et d'alpha-oléfines en C₃ à C₂₀.
